# EUROPEAN PATENT APPLICATION

(11) **EP 4 786 541 A1**
(43) Date of publication of application: **05.08.2026**
(21) Application number: 24872079.9
(22) Date of filing: 20.09.2024
(51) Int. Cl.: C08L 23/00, C08F 232/00, C08K 5/053, C08K 5/098, C08K 5/103, C08K 5/17, C08L 45/00, G02B 1/04

(54) **RESIN COMPOSITION, MOLDED BODY, AND OPTICAL COMPONENT**

(30) Priority: 26.09.2023 JP 2023162860
(71) Applicant: Mitsui Chemicals, Inc., Tokyo 104-0028 (JP)
(72) Inventor: KASUYA, Masakatsu, Sodegaura-shi, Chiba 299-0265 (JP); FUJIMURA, Futoshi, Sodegaura-shi, Chiba 299-0265 (JP); HIYAMIZU, Taiju, Sodegaura-shi, Chiba 299-0265 (JP)
(74) Representative: Hoffmann Eitle
(86) International application number: PCT/JP2024/033632
(87) International publication number: WO 2025/070288

(57) **Abstract**

A resin composition including a cyclic olefin-based copolymer (A), and a fatty acid ester composition (B) which includes pentaerythritol (B-1) and a fatty acid ester (B-2) of pentaerythritol, in which the cyclic olefin-based copolymer (A) contains a repeating unit (a) derived from at least one olefin represented by General Formula (I), and a repeating unit (b) derived from at least one cyclic olefin monomer selected from the group consisting of a repeating unit (AA) represented by General Formula (II), a repeating unit (AB) represented by General Formula (III), and a repeating unit (AC) represented by General Formula (IV), and in which in a case where a total content of the pentaerythritol (B-1) and the fatty acid ester (B-2) of pentaerythritol in the fatty acid ester composition (B) is set to 100% by mass, a content of the pentaerythritol (B-1) in the fatty acid ester composition (B) is equal to or less than 5.0% by mass.

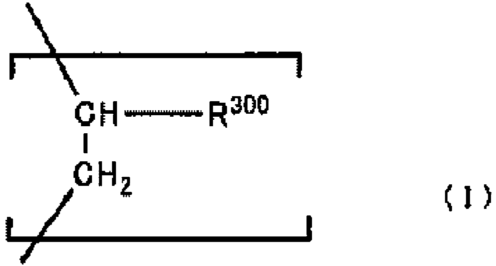

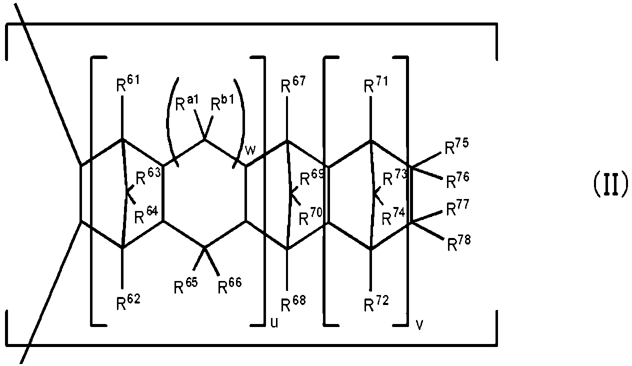

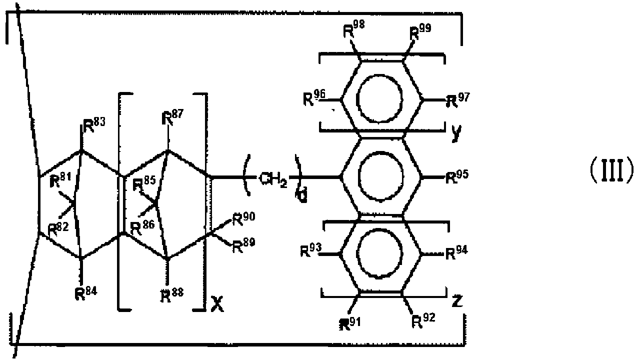

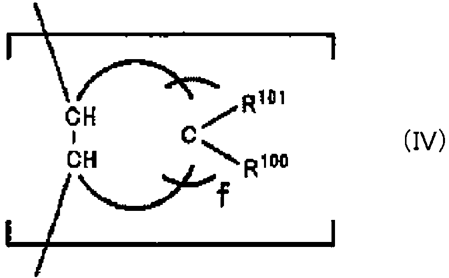

## Description

### TECHNICAL FIELD

The present invention relates to a resin composition, a molded body, and an optical component.

### BACKGROUND ART

A cyclic olefin-based copolymer resin composition has excellent optical performance and is therefore used as an optical component such as an optical lens.

Examples of the technique relating to the cyclic olefin-based resin composition used for the optical component include that described in Patent Document 1.

In Patent Document 1, for the purpose of obtaining a thermoplastic norbornene-based resin composition which exhibits sufficient mold releasability in melt molding or the like, does not generate voids, and has the heat resistance, chemical resistance, electrical properties, and the like of a thermoplastic norbornene-based resin, a resin composition including a thermoplastic norbornene-based resin, and (a) a compound represented by General Formula: RXₙ (in the formula, n represents a natural number, R represents a hydrocarbon group which may have a hydroxyl group, and X represents a hydroxyacyloxy group, provided that in a case where n is equal to or more than 2, n X's may or may not be the same, and the total number of carbon atoms in the formula is equal to or more than 16), and/or (b) saturated alcohols having equal to or more than 16 carbon atoms is disclosed.

### RELATED DOCUMENT

### PATENT DOCUMENT

Patent Document 1: Japanese Unexamined Patent Publication No. H09-241484

### SUMMARY OF THE INVENTION

### TECHNICAL PROBLEM

In recent years, in order to increase the degree of design freedom, optical components are required to further improve moisture-heat resistance and transparency in a case where the thickness is thick.

The present invention has been made in view of the above circumstances, and provides a resin composition capable of obtaining a molded body and an optical component having an improved performance balance of moisture-heat resistance and transparency, and a molded body and an optical component having an improved performance balance of moisture-heat resistance and transparency.

### SOLUTION TO PROBLEM

The present inventors conducted intensive investigations in order to achieve the above-described problem. As a result, the present inventors found that by using a fatty acid ester composition having a content of pentaerythritol within a specific range, a resin composition capable of obtaining a molded body and an optical component having an improved performance balance of moisture-heat resistance and transparency, and a molded body and an optical component having an improved performance balance of moisture-heat resistance and transparency can be provided, and completed the present invention.

That is, according to the present invention, a resin composition, a molded body, and an optical component described below are provided.
[1] A resin composition including:
   a cyclic olefin-based copolymer (A); and
   a fatty acid ester composition (B) which includes pentaerythritol (B-1) and a fatty acid ester (B-2) of pentaerythritol,
   in which the cyclic olefin-based copolymer (A) contains a repeating unit (a) derived from at least one olefin represented by General Formula (I), and a repeating unit (b) derived from at least one cyclic olefin monomer selected from the group consisting of a repeating unit (AA) represented by General Formula (II), a repeating unit (AB) represented by General Formula (III), and a repeating unit (AC) represented by General Formula (IV), and
   wherein in a case where a total content of the pentaerythritol (B-1) and the fatty acid ester (B-2) of pentaerythritol in the fatty acid ester composition (B) is set to 100% by mass, a content of the pentaerythritol (B-1) in the fatty acid ester composition (B) is equal to or less than 5.0% by mass, 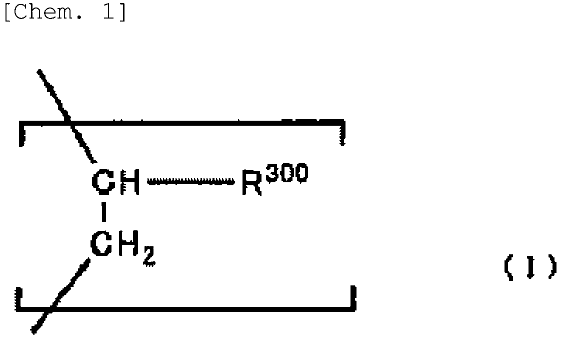
   (in General Formula (I), R³⁰⁰ represents a hydrogen atom or a linear or branched hydrocarbon group having 1 to 29 carbon atoms), 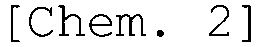 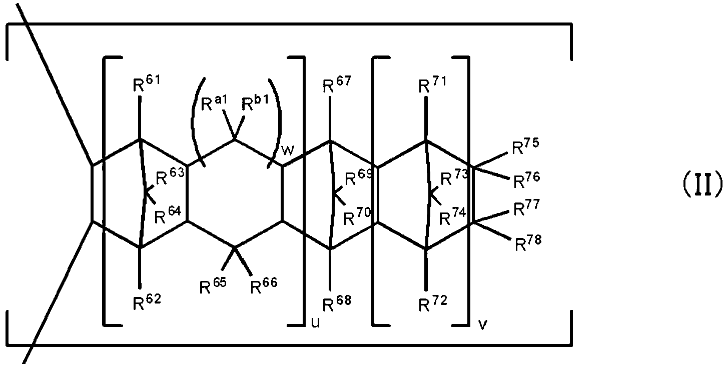
   (in General Formula (II), u is 0 or 1, v is 0 or a positive integer, w is 0 or 1, R⁶¹ to R⁷⁸ and R^{a1} and R^{b1} may be the same or different from each other and are each a hydrogen atom, a halogen atom, an alkyl group having 1 to 20 carbon atoms, a halogenated alkyl group having 1 to 20 carbon atoms, a cycloalkyl group having 3 to 15 carbon atoms, or an aromatic hydrocarbon group having 6 to 20 carbon atoms, and R⁷⁵ to R⁷⁸ may be bonded to each other to form a monocyclic ring or a polycyclic ring), 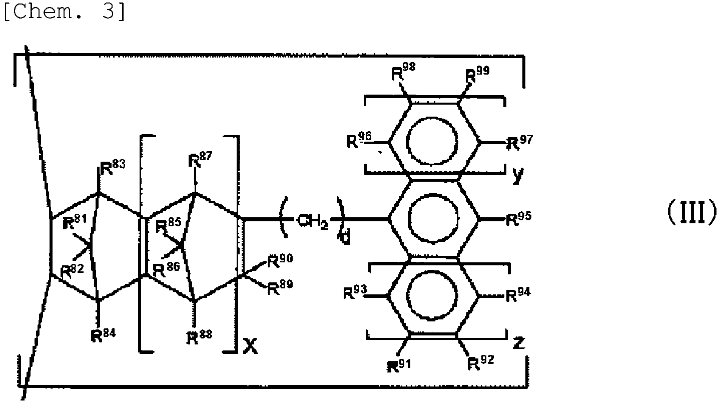
   (in General Formula (III), x and d are each an integer of 0 or equal to or more than 1, y and z are each 0, 1, or 2, R⁸¹ to R⁹⁹ may be the same or different from each other and are each a hydrogen atom, a halogen atom, an aliphatic hydrocarbon group that is an alkyl group having 1 to 20 carbon atoms or a cycloalkyl group having 3 to 15 carbon atoms, an aromatic hydrocarbon group having 6 to 20 carbon atoms, or an alkoxy group, a carbon atom to which R⁸⁹ and R⁹⁰ are bonded and a carbon atom to which R⁹³ is bonded or a carbon atom to which R⁹¹ is bonded may be bonded directly or through an alkylene group having 1 to 3 carbon atoms, and in a case of y = z = 0, R⁹⁵ and R⁹² or R⁹⁵ and R⁹⁹ may be bonded to each other to form a monocyclic aromatic ring or a polycyclic aromatic ring), 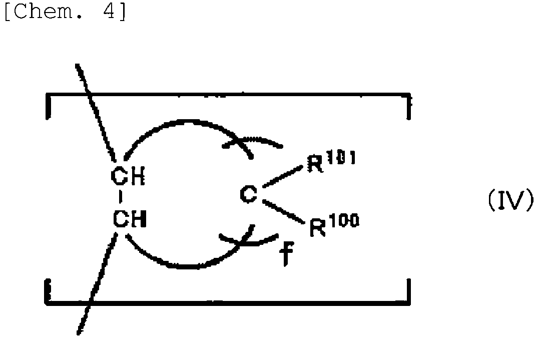
   (in General Formula (IV), R¹⁰⁰ and R¹⁰¹ may be the same or different from each other, and each represent a hydrogen atom or a hydrocarbon group having 1 to 5 carbon atoms, and f is 1 ≤ f ≤ 18).
[2] The resin composition according to [1],
   in which the content of the pentaerythritol (B-1) in the fatty acid ester composition (B) is equal to or less than 3.0% by mass in a case where a total content of the pentaerythritol (B-1) and the fatty acid ester (B-2) of pentaerythritol in the fatty acid ester composition (B) is set to 100% by mass.
[3] The resin composition according to [1] or [2],
   in which a fatty acid constituting the fatty acid ester (B-2) of pentaerythritol includes a fatty acid having equal to or more than 12 and equal to or less than 18 carbon atoms.
[4] The resin composition according to any one of [1] to [3],
   in which the fatty acid ester (B-2) of pentaerythritol includes a compound represented by Formula (1),

      RCOOCH₂C(CH₂OH)₃ ... (1)
   (in Formula (1), R is a saturated hydrocarbon group having equal to or more than 11 and equal to or less than 17 carbon atoms).
[5] The resin composition according to any one of [1] to [4],
   in which the fatty acid ester (B-2) of pentaerythritol includes pentaerythritol monostearate.
[6] The resin composition according to any one of [1] to [5],
   in which a content of the fatty acid ester composition (B) is equal to or more than 0.05 parts by mass and equal to or less than 5.0 parts by mass in a case where a content of the cyclic olefin-based copolymer (A) is set to 100 parts by mass.
[7] The resin composition according to any one of [1] to [6],
   in which a total content of the cyclic olefin-based copolymer (A) and the fatty acid ester composition (B) is equal to or more than 70% by mass and equal to or less than 100% by mass in a case where a total solid content of the resin composition is set to 100% by mass.
[8] The resin composition according to any one of [1] to [7], further including:
   a fatty acid metal salt (C).
[9] The resin composition according to any one of [1] to [8],
   in which the fatty acid metal salt (C) includes a metal salt of a long-chain fatty acid having equal to or more than 12 carbon atoms.
[10] The resin composition according to any one of [1] to [9],
   in which a content of the fatty acid metal salt (C) is equal to or more than 0.0001 parts by mass and equal to or less than 0.50 parts by mass with respect to 100 parts by mass of the cyclic olefin-based copolymer (A).
[11] The resin composition according to any one of [1] to [10], further including:
   a hindered amine-based compound (D).
[12] The resin composition according to [11],
   in which a content of the hindered amine-based compound (D) is equal to or more than 0.05 parts by mass and equal to or less than 3.0 parts by mass with respect to 100 parts by mass of the cyclic olefin-based copolymer (A).
[13] The resin composition according to any one of [1] to [12],
   in which in a case where an entirety of repeating units constituting the cyclic olefin-based copolymer (A) is set to 100 mol%, a proportion of the repeating unit (a) in the cyclic olefin-based copolymer (A) is equal to or more than 5 mol% and equal to or less than 95 mol%.
[14] The resin composition according to any one of [1] to [13],
   in which the repeating unit (a) in the cyclic olefin-based copolymer (A) includes a repeating unit derived from ethylene.
[15] The resin composition according to any one of [1] to [14],
   in which in a case where an entirety of repeating units constituting the cyclic olefin-based copolymer (A) is set to 100 mol%, a proportion of the repeating unit (a) in the cyclic olefin-based copolymer (A) is equal to or more than 5 mol% and equal to or less than 95 mol%.
[16] The resin composition according to any one of [1] to [15],
   in which the repeating unit (b) in the cyclic olefin-based copolymer (A) includes the repeating unit (AA) represented by General Formula (II).
[17] The resin composition according to any one of [1] to [16],
   in which the repeating unit (b) in the cyclic olefin-based copolymer (A) includes a repeating unit derived from at least one selected from the group consisting of bicyclo[2.2.1]-2-heptene and tetracyclo[4.4.0.1^{2,5}.1^{7,10}]-3-dodecene.
[18] The resin composition according to any one of [1] to [17],
   in which the cyclic olefin-based copolymer (A) includes one or two or more selected from the group consisting of a random copolymer of ethylene and tetracyclo[4.4.0.1^{2,5}.1^{7,10}]-3-dodecene, a random copolymer of ethylene and bicyclo[2.2.1]-2-heptene, and a random copolymer of ethylene, tetracyclo[4.4.0.1^{2,5}.1^{7,10}]-3-dodecene and benzonorbornadiene.
[19] The resin composition according to any one of [1] to [18],
   in which an internal haze measured by (Method) below is equal to or less than 0.4%,
   (Method)
   in which using an injection molding machine, the resin composition is injection-molded under conditions of a cylinder temperature of 270°C and a mold temperature of 126°C to prepare a test piece with an optical surface of 35 mm × 65 mm × 10 mm in thickness, and an internal haze of the injection-molded test piece is measured with a haze meter using benzyl alcohol based on JIS K 7136: 2000.
[20] A molded body including:
   the resin composition according to any one of [1] to [19].
[21] An optical component including:
   the molded body according to [20].

### ADVANTAGEOUS EFFECTS OF INVENTION

According to the present invention, a resin composition capable of obtaining a molded body and an optical component having an improved performance balance of moisture-heat resistance and transparency, and a molded body and an optical component having an improved performance balance of moisture-heat resistance and transparency can be provided.

### DESCRIPTION OF EMBODIMENTS

Hereinafter, the present invention will be described based on embodiments.

### <Resin Composition>

First, a resin composition according to the present embodiment will be described.

The resin composition of the present embodiment is a resin composition including a cyclic olefin-based copolymer (A), and a fatty acid ester composition (B) which includes pentaerythritol (B-1) and a fatty acid ester (B-2) of pentaerythritol, in which the cyclic olefin-based copolymer (A) contains a repeating unit (a) derived from at least one olefin represented by General Formula (I), and a repeating unit (b) derived from at least one cyclic olefin monomer selected from the group consisting of a repeating unit (AA) represented by General Formula (II), a repeating unit (AB) represented by General Formula (III), and a repeating unit (AC) represented by General Formula (IV), and in which in a case where a total content of the pentaerythritol (B-1) and the fatty acid ester (B-2) of pentaerythritol in the fatty acid ester composition (B) is set to 100% by mass, a content of the pentaerythritol (B-1) in the fatty acid ester composition (B) is equal to or less than 5.0% by mass.

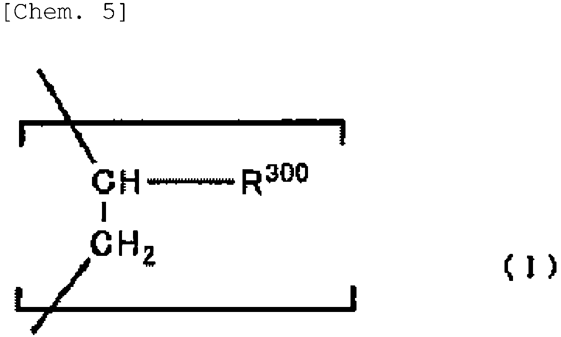

In General Formula (I), R³⁰⁰ represents a hydrogen atom or a linear or branched hydrocarbon group having 1 to 29 carbon atoms.

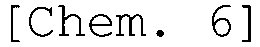

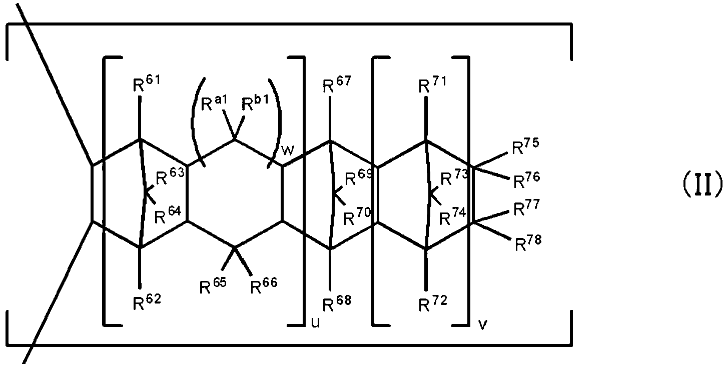

In General Formula (II), u is 0 or 1, v is 0 or a positive integer, preferably an integer of equal to or more than 0 and equal to or less than 2, and more preferably 0 or 1, w is 0 or 1, R⁶¹ to R⁷⁸ and R^{a1} and R^{b1} may be the same or different from each other and are each a hydrogen atom, a halogen atom, an alkyl group having 1 to 20 carbon atoms, a halogenated alkyl group having 1 to 20 carbon atoms, a cycloalkyl group having 3 to 15 carbon atoms, or an aromatic hydrocarbon group having 6 to 20 carbon atoms, and R⁷⁵ to R⁷⁸ may be bonded to each other to form a monocyclic ring or a polycyclic ring.

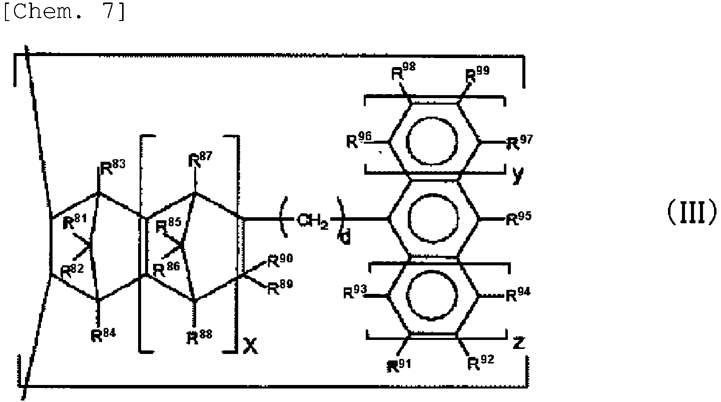

In General Formula (III), x and d are each an integer of 0 or equal to or more than 1, preferably an integer of equal to or more than 0 and equal to or less than 2, and more preferably 0 or 1, y and z are each 0, 1, or 2, R⁸¹ to R⁹⁹ may be the same or different from each other and are each a hydrogen atom, a halogen atom, an aliphatic hydrocarbon group that is an alkyl group having 1 to 20 carbon atoms or a cycloalkyl group having 3 to 15 carbon atoms, an aromatic hydrocarbon group having 6 to 20 carbon atoms, or an alkoxy group, a carbon atom to which R⁸⁹ and R⁹⁰ are bonded and a carbon atom to which R⁹³ is bonded or a carbon atom to which R⁹¹ is bonded may be bonded directly or through an alkylene group having 1 to 3 carbon atoms, and in a case of y = z = 0, R⁹⁵ and R⁹² or R⁹⁵ and R⁹⁹ may be bonded to each other to form a monocyclic aromatic ring or a polycyclic aromatic ring.

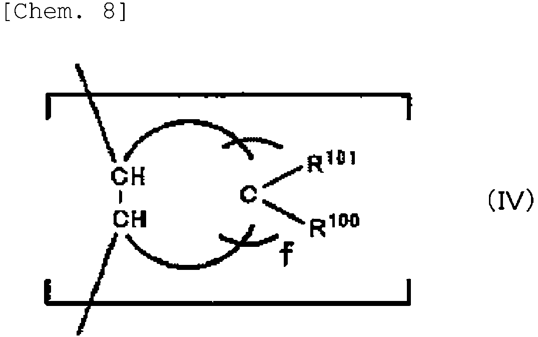

In General Formula (IV), R¹⁰⁰ and R¹⁰¹ may be the same or different from each other and each represent a hydrogen atom or a hydrocarbon group having 1 to 5 carbon atoms, and f is 1 ≤ f ≤ 18.

According to the resin composition according to the present embodiment, it is possible to obtain a molded body and an optical component having an improved performance balance of moisture-heat resistance and transparency.

The reason for this is not clear, but it is considered that, since the pentaerythritol having a higher polarity is uniformly dispersed without phase separation with respect to the cyclic olefin-based copolymer (A) having a lower polarity by setting the content of the pentaerythritol in the fatty acid ester composition (B) to be within a specific range, the performance balance of moisture-heat resistance and transparency of the obtained molded body and optical component can be improved.

From the above, in the resin composition according to the present embodiment, it is possible to obtain a molded body and an optical component having an improved performance balance of moisture-heat resistance and transparency even in a case where a molded body and an optical component having a large thickness are prepared.

In a case where a total content of the pentaerythritol (B-1) and the fatty acid ester (B-2) of pentaerythritol in the fatty acid ester composition (B) is set to 100% by mass, the content of the pentaerythritol (B-1) in the fatty acid ester composition (B) is equal to or less than 5.0% by mass, preferably equal to or less than 4.5% by mass, more preferably equal to or less than 3.0% by mass, still more preferably equal to or less than 2.5% by mass, still more preferably equal to or less than 2.0% by mass, still more preferably equal to or less than 1.8% by mass, still more preferably equal to or less than 1.5% by mass, still more preferably equal to or less than 1.0% by mass, still more preferably equal to or less than 0.8% by mass, and still more preferably equal to or less than 0.5% by mass. In a case where the content of the pentaerythritol (B-1) is equal to or less than the above-described upper limit value, the performance balance of moisture-heat resistance and transparency of the molded body and the optical component, which are formed using the resin composition according to the present embodiment, can be improved.

In addition, although the lower limit value of the content of the pentaerythritol (B-1) in the fatty acid ester composition (B) is not particularly limited, the lower limit value is, for example, equal to or more than 0.01% by mass, and may be equal to or more than 0.05% by mass, equal to or more than 0.1% by mass, equal to or more than 0.3% by mass, or equal to or more than 0.4% by mass.

In addition, from the viewpoint of improving the performance balance of moisture-heat resistance and transparency of the molded body and the optical component, which are formed using the resin composition according to the present embodiment, in a case where the total content of the pentaerythritol (B-1) and the fatty acid ester (B-2) of pentaerythritol in the fatty acid ester composition (B) according to the present embodiment is set to 100% by mass, the content of the pentaerythritol (B-1) in the fatty acid ester composition (B) according to the present embodiment is preferably equal to or more than 0.01% by mass and equal to or less than 5.0% by mass, more preferably equal to or more than 0.01% by mass and equal to or less than 4.5% by mass, still more preferably equal to or more than 0.01% by mass and equal to or less than 3.0% by mass, still more preferably equal to or more than 0.01% by mass and equal to or less than 2.5% by mass, still more preferably equal to or more than 0.01% by mass and equal to or less than 2.0% by mass, still more preferably equal to or more than 0.01% by mass and equal to or less than 1.8% by mass, still more preferably equal to or more than 0.05% by mass and equal to or less than 1.5% by mass, still more preferably equal to or more than 0.1% by mass and equal to or less than 1.0% by mass, still more preferably equal to or more than 0.3% by mass and equal to or less than 0.8% by mass, and still more preferably equal to or more than 0.4% by mass and equal to or less than 0.5% by mass.

The content of the pentaerythritol (B-1) in the fatty acid ester composition (B) can be quantified by gas chromatography, for example, by creating a calibration curve using pentaerythritol (manufactured by FUJIFILM Wako Pure Chemical Corporation) or the like.

Specifically, for example, the following measurement conditions can be exemplified.
Measurement device: 6890N (Agilent Technologies)
Column: DB-1HT (manufactured by J&W Scientific)
Carrier gas: He (constant flow mode)
Detector: FID

More specifically, the content of the pentaerythritol (B-1) in the fatty acid ester composition (B) of the present embodiment can be measured by the method described in paragraphs 0168 to 0170 of Japanese Patent No. 5778884.

Hereinafter, each component will be specifically described.

### [Cyclic Olefin-Based Copolymer (A)]

The cyclic olefin-based copolymer (A) in the resin composition of the present embodiment contains a repeating unit (a) derived from at least one olefin represented by General Formula (I) and a repeating unit (b) derived from at least one cyclic olefin monomer selected from the group consisting of a repeating unit (AA) represented by General Formula (II), a repeating unit (AB) represented by General Formula (III), and a repeating unit (AC) represented by General Formula (IV).

The olefin monomer, which is one of the copolymerization raw materials of the cyclic olefin-based copolymer (A) of the present embodiment, forms the repeating unit (a) represented by General Formula (I) by addition copolymerization. Specifically, an olefin monomer represented by General Formula (Ia) corresponding to General Formula (I) is used.

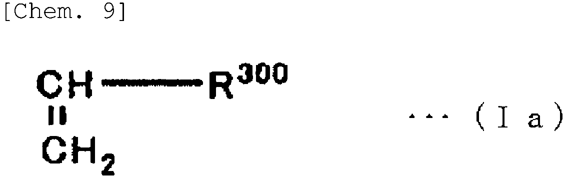

In General Formula (I) and General Formula (Ia), R³⁰⁰ represents a hydrogen atom or a linear or branched hydrocarbon group having 1 to 29 carbon atoms. For example, the olefin monomer represented by General Formula (Ia) include ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicosene, and the like. Among these, from the viewpoint of obtaining a molded body having more excellent heat resistance, mechanical properties, and optical properties, at least one selected from ethylene and propylene is preferable, and ethylene is more preferable as the olefin monomer represented by General Formula (Ia). That is, the cyclic olefin-based copolymer (A) preferably contains a repeating unit derived from at least one selected from ethylene and propylene as the repeating unit (a), and more preferably contains a repeating unit derived from ethylene. Two or more olefin monomers represented by General Formula (Ia) may be used. In addition, as the olefin monomer, at least one or more biomass-derived monomers (ethylene, propylene, and α-olefin) may be contained.

In a case where an entirety of the repeating units constituting the cyclic olefin-based copolymer (A) of the present embodiment is set to 100 mol%, from the viewpoint of obtaining a molded body having more excellent heat resistance, mechanical properties and optical properties, the proportion of the repeating unit (a) in the cyclic olefin-based copolymer (A) of the present embodiment is preferably equal to or more than 5 mol%, more preferably equal to or more than 20 mol%, still more preferably equal to or more than 40 mol%, still more preferably equal to or more than 50 mol%, and still more preferably equal to or more than 60 mol%.

In addition, in a case where an entirety of the repeating units constituting the cyclic olefin-based copolymer (A) of the present embodiment is set to 100 mol%, from the viewpoint of obtaining a molded body having more excellent heat resistance, mechanical properties and optical properties, the proportion of the repeating unit (a) derived from olefin in the cyclic olefin-based copolymer (A) of the present embodiment is preferably equal to or less than 95 mol%, more preferably equal to or less than 90 mol%, still more preferably equal to or less than 85 mol%, still more preferably equal to or less than 80 mol%, still more preferably equal to or less than 75 mol%, still more preferably equal to or less than 70 mol%, and still more preferably equal to or less than 65 mol%.

In addition, in a case where an entirety of the repeating units constituting the cyclic olefin-based copolymer (A) of the present embodiment is set to 100 mol%, from the viewpoint of obtaining a molded body having more excellent heat resistance, mechanical properties and optical properties, the proportion of the repeating unit (a) derived from olefin in the cyclic olefin-based copolymer (A) of the present embodiment is preferably equal to or more than 5 mol% and equal to or less than 95 mol%, more preferably equal to or more than 5 mol% and equal to or less than 90 mol%, still more preferably equal to or more than 5 mol% and equal to or less than 85 mol%, still more preferably equal to or more than 20 mol% and equal to or less than 80 mol%, still more preferably equal to or more than 40 mol% and equal to or less than 75 mol%, still more preferably equal to or more than 50 mol% and equal to or less than 70 mol%, and still more preferably equal to or more than 60 mol% and equal to or less than 65 mol%.

The proportion of the repeating unit (a) derived from olefin can be measured by ¹³C-NMR.

The cyclic olefin monomer, which is one of the copolymerization raw materials of the cyclic olefin-based copolymer (A) of the present embodiment, is a monomer that forms the repeating unit (b) derived from a cyclic olefin monomer represented by General Formula (II), General Formula (III), or General Formula (IV) by addition copolymerization. Specifically, a cyclic olefin monomer represented by General Formula (IIa), General Formula (IIIa), or General Formula (IVa), each corresponding to General Formula (II), General Formula (III), or General Formula (IV) described above, is used.

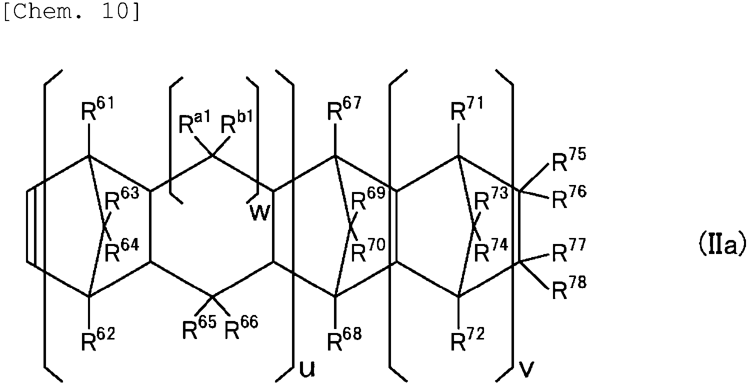

In General Formula (II) and General Formula (IIa), u is 0 or 1, v is 0 or a positive integer, preferably an integer of equal to or more than 0 and equal to or less than 2, and more preferably 0 or 1, w is 0 or 1, R⁶¹ to R⁷⁸ and R^{a1} and R^{b1} may be the same or different from each other and are each a hydrogen atom, a halogen atom, an alkyl group having 1 to 20 carbon atoms, a halogenated alkyl group having 1 to 20 carbon atoms, a cycloalkyl group having 3 to 15 carbon atoms, or an aromatic hydrocarbon group having 6 to 20 carbon atoms, and R⁷⁵ to R⁷⁸ may be bonded to each other to form a monocyclic ring or a polycyclic ring.

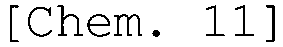

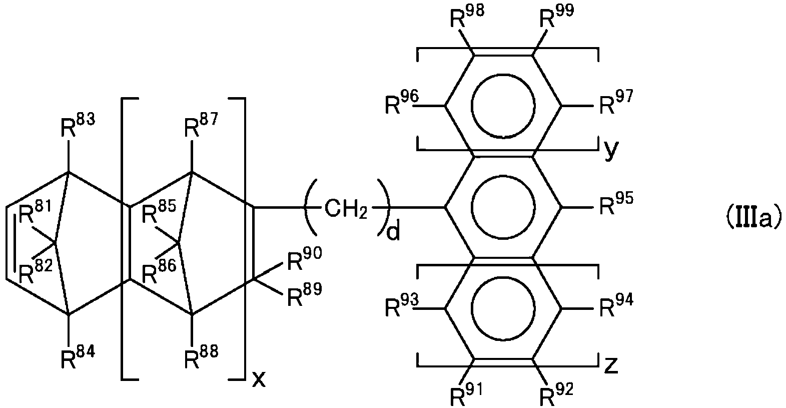

In General Formula (III) and General Formula (IIIa), x and d are each an integer of 0 or equal to or more than 1, preferably an integer of equal to or more than 0 and equal to or less than 2, and more preferably 0 or 1, y and z are each 0, 1, or 2, R⁸¹ to R⁹⁹ may be the same or different from each other and are each a hydrogen atom, a halogen atom, an aliphatic hydrocarbon group that is an alkyl group having 1 to 20 carbon atoms or a cycloalkyl group having 3 to 15 carbon atoms, an aromatic hydrocarbon group having 6 to 20 carbon atoms, or an alkoxy group, a carbon atom to which R⁸⁹ and R⁹⁰ are bonded and a carbon atom to which R⁹³ is bonded or a carbon atom to which R⁹¹ is bonded may be bonded directly or through an alkylene group having 1 to 3 carbon atoms, and in a case of y = z = 0, R⁹⁵ and R⁹² or R⁹⁵ and R⁹⁹ may be bonded to each other to form a monocyclic aromatic ring or a polycyclic aromatic ring.

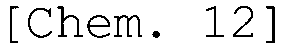

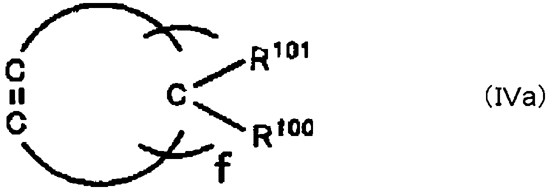

In General Formula (IV) and General Formula (IVa), R¹⁰⁰ and R¹⁰¹ may be the same as or different from each other, and each represent a hydrogen atom or a hydrocarbon group having 1 to 5 carbon atoms, and f is 1 ≤ f ≤ 18.

Since the olefin monomer represented by General Formula (Ia) described above and the cyclic olefin monomer represented by General Formula (IIa), (IIIa), or (IVa) are used as a copolymerization component to further improve the solubility of the cyclic olefin-based copolymer (A) in a solvent, the moldability is improved, and the yield of the product is improved.

Regarding specific examples of the cyclic olefin monomers represented by General Formula (IIa), (IIIa), or (IVa), compounds described in paragraphs 0037 to 0063 of Pamphlet of International Publication No. WO2006/118261 can be used. The cyclic olefin monomers are obtained from dicyclopentadiene and ethylene, and may contain, as the ethylene, a unit derived from a biomass-derived monomer (ethylene).

Specifically, examples thereof include bicyclo-2-heptene derivatives (bicyclohept-2-ene derivatives), tricyclo-3-decene derivatives, tricyclo-3-undecene derivatives, tetracyclo-3-dodecene derivatives, pentacyclo-4-pentadecene derivatives, pentacyclo pentadecadien derivatives, pentacyclo-3-pentadecene derivatives, pentacyclo-4-hexadecene derivatives, pentacyclo-3-hexadecene derivatives, hexacyclo-4-heptadecene derivatives, heptacyclo-5-eicosene derivatives, heptacyclo-4-eicosene derivatives, heptacyclo-5-heneicosene derivatives, octacyclo-5-docosene derivatives, nonacyclo-5-pentacosene derivatives, nonacyclo-6-hexacosene derivatives, cyclopentadieneacenaphthylene adducts, 1,4-methano-1,4,4a,9a-tetrahydrofluorene derivatives, 1,4-methano-1,4,4a,5,10,10a-hexahydroanthracene derivatives, cycloalkylene derivatives having 3 to 20 carbon atoms, and the like.

As the above-described repeating unit (b) in the cyclic olefin-based copolymer (A), among the cyclic olefin monomers represented by General Formulae (IIa), (IIIa), or (IVa), a repeating unit derived from a cyclic olefin monomer represented by General Formula (IIa), that is, the repeating unit (AA) represented by General Formula (II) is preferable.

In addition, it is preferable to use the cyclic olefin monomer represented by General Formula (IIa) and any of the cyclic olefin monomer represented by General Formula (IIIa) or (IVa).

As the cyclic olefin monomer represented by General Formula (IIa), at least one selected from the group consisting of bicyclo[2.2.1]-2-heptene (also referred to as norbornene) and tetracyclo[4.4.0.1^{2,5}.1^{7,10}]-3-dodecene (also referred to as tetracyclododecene) is preferably used, and tetracyclo[4.4.0.1^{2,5}.1^{7,10}]-3-dodecene is more preferably used. That is, the repeating unit (b) in the cyclic olefin-based copolymer (A) preferably includes a repeating unit derived from at least one selected from the group consisting of bicyclo[2.2.1]-2-heptene and tetracyclo[4.4.0.1^{2,5}.1^{7,10}]-3-dodecene. There is an advantage that elastic modulus of each of the copolymer and the molded body can be easily maintained since such a cyclic olefin has a rigid ring structure.

In a case where an entirety of the repeating units constituting the cyclic olefin-based copolymer (A) of the present embodiment is set to 100 mol%, from the viewpoint of obtaining a molded body having more excellent heat resistance, mechanical properties and optical properties, the proportion of the repeating unit (b) derived from a cyclic olefin monomer in the cyclic olefin-based copolymer (A) of the present embodiment is preferably equal to or more than 5 mol%, more preferably equal to or more than 10 mol%, still more preferably equal to or more than 15 mol%, still more preferably equal to or more than 20 mol%, still more preferably equal to or more than 25 mol%, still more preferably equal to or more than 30 mol%, and still more preferably equal to or more than 35 mol%.

In addition, in a case where an entirety of the repeating units constituting the cyclic olefin-based copolymer (A) of the present embodiment is set to 100 mol%, from the viewpoint of obtaining a molded body having more excellent heat resistance, mechanical properties and optical properties, the proportion of the repeating unit (b) derived from a cyclic olefin monomer in the cyclic olefin-based copolymer (A) of the present embodiment is preferably equal to or less than 95 mol%, more preferably equal to or less than 80 mol%, still more preferably equal to or less than 60 mol%, still more preferably equal to or less than 50 mol%, and still more preferably equal to or less than 40 mol%.

In addition, in a case where an entirety of the repeating units constituting the cyclic olefin-based copolymer (A) of the present embodiment is set to 100 mol%, from the viewpoint of obtaining a molded body having more excellent heat resistance, mechanical properties and optical properties, the proportion of the repeating unit (b) derived from a cyclic olefin monomer in the cyclic olefin-based copolymer (A) of the present embodiment is preferably equal to or more than 5 mol% and equal to or less than 95 mol%, more preferably equal to or more than 10 mol% and equal to or less than 95 mol%, still more preferably equal to or more than 15 mol% and equal to or less than 95 mol%, still more preferably equal to or more than 20 mol% and equal to or less than 80 mol%, still more preferably equal to or more than 25 mol% and equal to or less than 60 mol%, still more preferably equal to or more than 30 mol% and equal to or less than 50 mol%, and still more preferably equal to or more than 35 mol% and equal to or less than 40 mol%.

The copolymerization type of the cyclic olefin-based copolymer (A) of the present embodiment is not particularly limited, and examples of the copolymerization type include a random copolymer and a block copolymer. In the resin composition according to the present embodiment, from the viewpoint of obtaining a molded body and an optical component with further improved transparency, it is preferable to use a random copolymer as the cyclic olefin-based copolymer (A).

The cyclic olefin-based copolymer (A) of the present embodiment preferably includes one or two or more selected from the group consisting of a random copolymer of ethylene and tetracyclo[4.4.0.1^{2,5}.1^{7,10}]-3-dodecene, a random copolymer of ethylene and bicyclo[2.2.1]-2-heptene, and a random copolymer of ethylene, tetracyclo[4.4.0.1^{2,5}.1^{7,10}]-3-dodecene and benzonorbornadiene, and more preferably includes one or two or more selected from the group consisting of a random copolymer of ethylene and tetracyclo[4.4.0.1^{2,5}.1^{7,10}]-3-dodecene and a random copolymer of ethylene, tetracyclo[4.4.0.1^{2,5}.1^{7,10}]-3-dodecene and benzonorbornadiene.

In the present embodiment, one type of the cyclic olefin-based copolymer (A) may be used alone, or two or more types of the cyclic olefin-based copolymers (A) may be used in combination.

The cyclic olefin-based copolymer (A) according to the present embodiment can be produced, for example, by appropriately selecting conditions according to the methods of Japanese Unexamined Patent Publication No. S60-168708, Japanese Unexamined Patent Publication No. S61-120816, Japanese Unexamined Patent Publication No. S61-115912, Japanese Unexamined Patent Publication No. S61-115916, Japanese Unexamined Patent Publication No. S61-271308, Japanese Unexamined Patent Publication No. S61-272216, Japanese Unexamined Patent Publication No. S62-252406, Japanese Unexamined Patent Publication No. S62-252407, and the like.

In the cyclic olefin-based copolymer (A) of the present embodiment, at least once, a hydrogenation catalyst and hydrogen are brought into contact with the cyclic olefin-based copolymer (A) or a system containing the cyclic olefin-based copolymer (A) and a monomer which is a raw material, and at least a part of the unsaturated bonds possessed by the cyclic olefin-based copolymer (A) and/or the monomer is hydrogenated, so that the heat resistance and optical performance such as transparency of the cyclic olefin-based copolymer (A) can be improved. The above-described hydrogenation, so-called hydrogen addition, can be carried out by a conventionally known method.

The glass transition point (Tg) of the cyclic olefin-based copolymer (A) according to the present embodiment is preferably equal to or higher than 120°C, more preferably equal to or higher than 125°C, and still more preferably equal to or higher than 130°C. In a case where the glass transition point (Tg) of the cyclic olefin-based copolymer (A) is within the above-described range, it is possible to obtain further improved heat resistance, moisture-heat resistance and transparency in a case of being used as an optical component such as an in-vehicle camera lens or a camera lens for a portable device, which requires heat resistance. The upper limit of the glass transition point (Tg) of the cyclic olefin-based copolymer (A) according to the present embodiment is not particularly limited, and is preferably equal to or lower than 180°C and more preferably equal to or lower than 170°C from the viewpoint of moldability.

In addition, from the viewpoint of obtaining more excellent heat resistance, moisture-heat resistance and transparency in a case of being used as an optical component such as an in-vehicle camera lens or a camera lens for a portable device, which requires heat resistance, the glass transition point (Tg) of the cyclic olefin-based copolymer (A) according to the present embodiment is preferably equal to or higher than 120°C and equal to or lower than 180°C, more preferably equal to or higher than 125°C and equal to or lower than 180°C, and still more preferably equal to or higher than 130°C and equal to or lower than 170°C.

The glass transition point (Tg) of the cyclic olefin-based copolymer (A) according to the present embodiment can be measured using a differential scanning calorimeter (DSC).

### [Fatty Acid Ester Composition (B)]

The fatty acid ester composition (B) of the present embodiment includes pentaerythritol (B-1) and a fatty acid ester (B-2) of pentaerythritol.

Since the resin composition of the present embodiment includes the fatty acid ester composition (B) and the content of the pentaerythritol (B-1) is equal to or less than the above-described upper limit value, it is possible to obtain a molded body and an optical component having an improved performance balance of moisture-heat resistance and transparency even in a case of a thick molded article.

Here, the fatty acid ester composition (B) of the present embodiment is preferably a composition obtained by an esterification reaction of pentaerythritol and a fatty acid, and the pentaerythritol (B-1) in the fatty acid ester composition (B) of the present embodiment preferably includes unreacted pentaerythritol which has not undergone an esterification reaction.

In the fatty acid ester composition (B) of the present embodiment, the fatty acid constituting the fatty acid ester (B-2) of pentaerythritol preferably includes a fatty acid having equal to or more than 12 and equal to or less than 18 carbon atoms, more preferably includes a fatty acid having equal to or more than 14 and equal to or less than 18 carbon atoms, still more preferably includes a fatty acid having equal to or more than 16 and equal to or less than 18 carbon atoms, and still more preferably includes a fatty acid having 18 carbon atoms. In this manner, it is possible to obtain a molded body and an optical component having a further improved performance balance of moisture-heat resistance and transparency, and it is possible to further reduce the mold contamination during the molding of the molded body and the optical component.

In the fatty acid ester composition (B) of the present embodiment, it is preferable that the fatty acid ester (B-2) of pentaerythritol includes a compound represented by Formula (1).

RCOOCH₂C(CH₂OH)₃ ... (1)

(in Formula (1), R is a saturated hydrocarbon group having equal to or more than 11 and equal to or less than 17 carbon atoms).

In addition, R is more preferably a saturated hydrocarbon group having equal to or more than 13 and equal to or less than 17 carbon atoms, still more preferably a saturated hydrocarbon group having equal to or more than 15 and equal to or less than 17 carbon atoms, and still more preferably a saturated hydrocarbon group having 17 carbon atoms.

Such a fatty acid ester (B-2) includes, for example, one or two or more selected from the group consisting of pentaerythritol laurate, pentaerythritol myristate, pentaerythritol palmitate and pentaerythritol stearate. Among these, from the viewpoint of obtaining a molded body and an optical component having a further improved performance balance of moisture-heat resistance and transparency, and from the viewpoint of further reducing mold contamination during the molding of the molded body and the optical component, pentaerythritol stearate is preferable.

It is preferable that such a fatty acid ester (B-2) includes one or two or more selected from the group consisting of a monoester, a diester, a triester and a tetraester.

In a case where the fatty acid ester (B-2) includes two or more selected from the group consisting of a monoester, a diester, a triester and a tetraester, from the viewpoint of obtaining a molded body and an optical component having a further improved performance balance of moisture-heat resistance and transparency, in a case where a total amount of the fatty acid ester (B-2) is set to 100% by mass, a range of the content of the monoester in the fatty acid ester (B-2) is preferably equal to or more than 10% by mass and equal to or less than 50% by mass, more preferably equal to or more than 15% by mass and equal to or less than 45% by mass, and still more preferably equal to or more than 20% by mass and equal to or less than 40% by mass.

In addition, in a case where the fatty acid ester (B-2) includes two or more selected from the group consisting of a monoester, a diester, a triester and a tetraester, the total content of the diester and the triester in the fatty acid ester (B-2) may be, for example, equal to or more than 50% by mass and equal to or less than 90% by mass, equal to or more than 55% by mass and equal to or less than 85% by mass, or equal to or more than 60% by mass and equal to or less than 80% by mass.

In a case where a content of the cyclic olefin-based copolymer (A) is set to 100 parts by mass, the lower limit value of the content of the fatty acid ester composition (B) in the resin composition of the present embodiment is preferably equal to or more than 0.05 parts by mass, more preferably equal to or more than 0.1 parts by mass, still more preferably equal to or more than 0.5 parts by mass, still more preferably equal to or more than 1.0 part by mass, and still more preferably equal to or more than 1.5 parts by mass. In a case where the content of the fatty acid ester composition (B) is equal to or more than the above-described lower limit value, it is possible to obtain a molded body and an optical component having a further improved performance balance of moisture-heat resistance and transparency.

In addition, in a case where a content of the cyclic olefin-based copolymer (A) is set to 100 parts by mass, the upper limit value of the content of the fatty acid ester composition (B) in the resin composition according to the present embodiment is preferably equal to or less than 5.0 parts by mass, more preferably equal to or less than 4.0 parts by mass, and still more preferably equal to or less than 3.0 parts by mass. In a case where the content of the fatty acid ester composition (B) is equal to or less than the above-described upper limit value, the amount of gasification of the fatty acid ester composition (B) during molding can be suppressed, and the occurrence of turbidity can be suppressed.

In addition, from the viewpoint of obtaining a molded body and an optical component having a further improved performance balance of moisture-heat resistance and transparency, in a case where a content of the cyclic olefin-based copolymer (A) is set to 100 parts by mass, the content of the fatty acid ester composition (B) in the resin composition of the present embodiment is preferably equal to or more than 0.05 parts by mass and equal to or less than 5.0 parts by mass, more preferably equal to or more than 0.1 parts by mass and equal to or less than 5.0 parts by mass, still more preferably equal to or more than 0.5 parts by mass and equal to or less than 5.0 parts by mass, still more preferably equal to or more than 1.0 parts by mass and equal to or less than 4.0 parts by mass, and still more preferably equal to or more than 1.5 parts by mass and equal to or less than 3.0 parts by mass.

In a case where a total solid content of the resin composition is set to 100 % by mass, the lower limit value of the total content of the cyclic olefin-based copolymer (A) and the fatty acid ester composition (B) in the resin composition of the present embodiment is preferably equal to or more than 70% by mass, more preferably equal to or more than 80% by mass, still more preferably equal to or more than 85% by mass, still more preferably equal to or more than 90% by mass, still more preferably equal to or more than 95% by mass, and still more preferably equal to or more than 98% by mass. In a case where the total content of the cyclic olefin-based copolymer (A) and the fatty acid ester composition (B) is equal to or more than the above-described lower limit value, the performance balance of moisture-heat resistance and transparency of the molded body and the optical component, which are formed using the resin composition according to the present embodiment, can be further improved.

In addition, the upper limit value of the total content of the cyclic olefin-based copolymer (A) and the fatty acid ester composition (B) in the resin composition according to the present embodiment is not particularly limited, and is, for example, equal to or less than 100% by mass.

In addition, from the viewpoint of further improving the performance balance of moisture-heat resistance and transparency of the molded body and the optical component, which are formed using the resin composition according to the present embodiment, in a case where a total solid content of the resin composition is set to 100% by mass, the total content of the cyclic olefin-based copolymer (A) and the fatty acid ester composition (B) in the resin composition according to the present embodiment is preferably equal to or more than 70% by mass and equal to or less than 100% by mass, more preferably equal to or more than 80% by mass and equal to or less than 100% by mass, still more preferably equal to or more than 85% by mass and equal to or less than 100% by mass, still more preferably equal to or more than 90% by mass and equal to or less than 100% by mass, still more preferably equal to or more than 95% by mass and equal to or less than 100% by mass, and still more preferably equal to or more than 98% by mass and equal to or less than 100% by mass.

### [Fatty Acid Metal Salt (C)]

The resin composition of the present embodiment preferably further includes a fatty acid metal salt (C).

In a case where the resin composition of the present embodiment further includes the fatty acid metal salt (C), the performance balance of the processability and the mold releasability of the obtained resin composition during injection molding can be improved, and a molded body having a more excellent appearance can be obtained.

The fatty acid metal salt (C) of the present embodiment preferably includes a metal salt of a long-chain fatty acid having equal to or more than 12 carbon atoms, from the viewpoint of further improving the performance balance of the processability and the mold releasability.

From the viewpoint of further improving the performance balance of processability and mold releasability of the obtained resin composition, the metal salt of a long-chain fatty acid having equal to or more than 12 carbon atoms preferably includes one or two or more selected from the group consisting of lithium stearate, magnesium stearate, calcium stearate, calcium laurate, calcium ricinoleate, strontium stearate, barium stearate, barium laurate, barium ricinoleate, cadmium stearate, cadmium laurate, cadmium ricinoleate, cadmium naphthenate, cadmium 2-ethylhexonate, zinc laurate, zinc ricinoleate, zinc 2-ethylhexonate, zinc stearate, zinc dibasic stearate, and zinc naphthenate, and from the viewpoint of further improving the performance balance of processability and mold releasability of the obtained resin composition and transparency of the molded body using the resin composition, more preferably includes one or two or more selected from the group consisting of calcium stearate and zinc stearate, and still more preferably includes zinc stearate.

From the viewpoint of further improving the performance balance of processability and mold releasability of the obtained resin composition, in a case where a content of the cyclic olefin-based copolymer (A) is set to 100 parts by mass, the lower limit value of the content of the fatty acid metal salt (C) in the resin composition of the present embodiment is preferably equal to or more than 0.0001 parts by mass, more preferably equal to or more than 0.0005 parts by mass, still more preferably equal to or more than 0.0010 parts by mass, still more preferably equal to or more than 0.0015 parts by mass, still more preferably equal to or more than 0.0020 parts by mass, still more preferably equal to or more than 0.0025 parts by mass, still more preferably equal to or more than 0.0030 parts by mass, and still more preferably equal to or more than 0.0035 parts by mass.

In addition, from the viewpoint of further improving the transparency of the molded body which is formed using the resin composition according to the present embodiment, in a case where a content of the cyclic olefin-based copolymer (A) is set to 100 parts by mass, the upper limit value of the content of the fatty acid metal salt (C) in the resin composition according to the present embodiment is preferably equal to or less than 0.50 parts by mass, more preferably equal to or less than 0.40 parts by mass, still more preferably equal to or less than 0.30 parts by mass, still more preferably equal to or less than 0.20 parts by mass, still more preferably equal to or less than 0.15 parts by mass, still more preferably equal to or less than 0.12 parts by mass, still more preferably equal to or less than 0.10 parts by mass, still more preferably equal to or less than 0.07 parts by mass, and still more preferably equal to or less than 0.05 parts by mass.

In addition, in the resin composition according to the present embodiment, from the viewpoint of further improving the performance balance of processability and mold releasability of the obtained resin composition and transparency of the molded body using the resin composition, in a case where a content of the cyclic olefin-based copolymer (A) is set to 100 parts by mass, the content of the fatty acid metal salt (C) is preferably equal to or more than 0.0001 parts by mass and equal to or less than 0.50 parts by mass, more preferably equal to or more than 0.0001 parts by mass and equal to or less than 0.40 parts by mass, still more preferably equal to or more than 0.0005 parts by mass and equal to or less than 0.30 parts by mass, still more preferably equal to or more than 0.0010 parts by mass and equal to or less than 0.20 parts by mass, still more preferably equal to or more than 0.0015 parts by mass and equal to or less than 0.15 parts by mass, still more preferably equal to or more than 0.0020 parts by mass and equal to or less than 0.12 parts by mass, still more preferably equal to or more than 0.0025 parts by mass and equal to or less than 0.10 parts by mas, still more preferably equal to or more than 0.0030 parts by mass and equal to or less than 0.07 parts by mass, and still more preferably equal to or more than 0.0035 parts by mass and equal to or less than 0.05 parts by mass.

The fatty acid metal salt (C) of the present embodiment may be contained in the resin composition by simultaneously blending the cyclic olefin-based copolymer (A), the fatty acid ester composition (B) and the fatty acid metal salt (C), or the fatty acid metal salt (C) may be added later to a pellet obtained by molding the resin composition containing the cyclic olefin-based copolymer (A) and the fatty acid ester composition (B). In addition, in a case where the resin composition of the present embodiment includes a hindered amine-based compound (D) described later, the fatty acid metal salt (C) of the present embodiment may be contained in the resin composition by simultaneously blending the cyclic olefin-based copolymer (A), the fatty acid ester composition (B), the fatty acid metal salt (C) and the hindered amine-based compound (D), or the fatty acid metal salt (C) may be added to a pellet obtained by molding the resin composition containing the cyclic olefin-based copolymer (A), the fatty acid ester composition (B) and the hindered amine-based compound (D).

### [Hindered Amine-Based Compound (D)]

The resin composition of the present embodiment preferably further includes a hindered amine-based compound (D).

In a case where the resin composition according to the present embodiment further includes the hindered amine-based compound (D), the light resistance of the obtained resin composition can be improved, and deterioration and discoloration due to UV light can be suppressed.

From the viewpoint of improving the light resistance of the obtained resin composition, the proportion of carbon atoms in the molecular structure of the hindered amine-based compound (D) is preferably equal to or more than 67% by mass and equal to or less than 80% by mass, more preferably equal to or more than 68% by mass and equal to or less than 79% by mass, and still more preferably equal to or more than 70% by mass and equal to or less than 77% by mass.

The above-described proportion of carbon atoms in the molecular structure of the hindered amine-based compound (D) is a theoretical value calculated from the chemical formula, but this theoretical value substantially coincides with the proportion of carbon atoms measured by a CHN element analyzer (for example, CHNS-932 manufactured by LECO Corporation).

From the viewpoint of improving the light resistance of the obtained resin composition, the molecular weight of the hindered amine-based compound (D) is preferably equal to or more than 500 and equal to or less than 3,500, more preferably equal to or more than 600 and equal to or less than 3,000, and still more preferably equal to or more than 700 and equal to or less than 2,000.

The above-described molecular weight of the hindered amine-based compound (D) is a theoretical value calculated from the chemical formula, but this theoretical value substantially coincides with the weight-average molecular weight in terms of polystyrene measured by gel permeation chromatography (GPC) or a molecular weight measured by mass spectrometry.

Examples of the hindered amine-based compound (D) satisfying the above-described properties include compounds represented by Chemical Formulae [1] to [37].

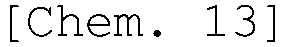

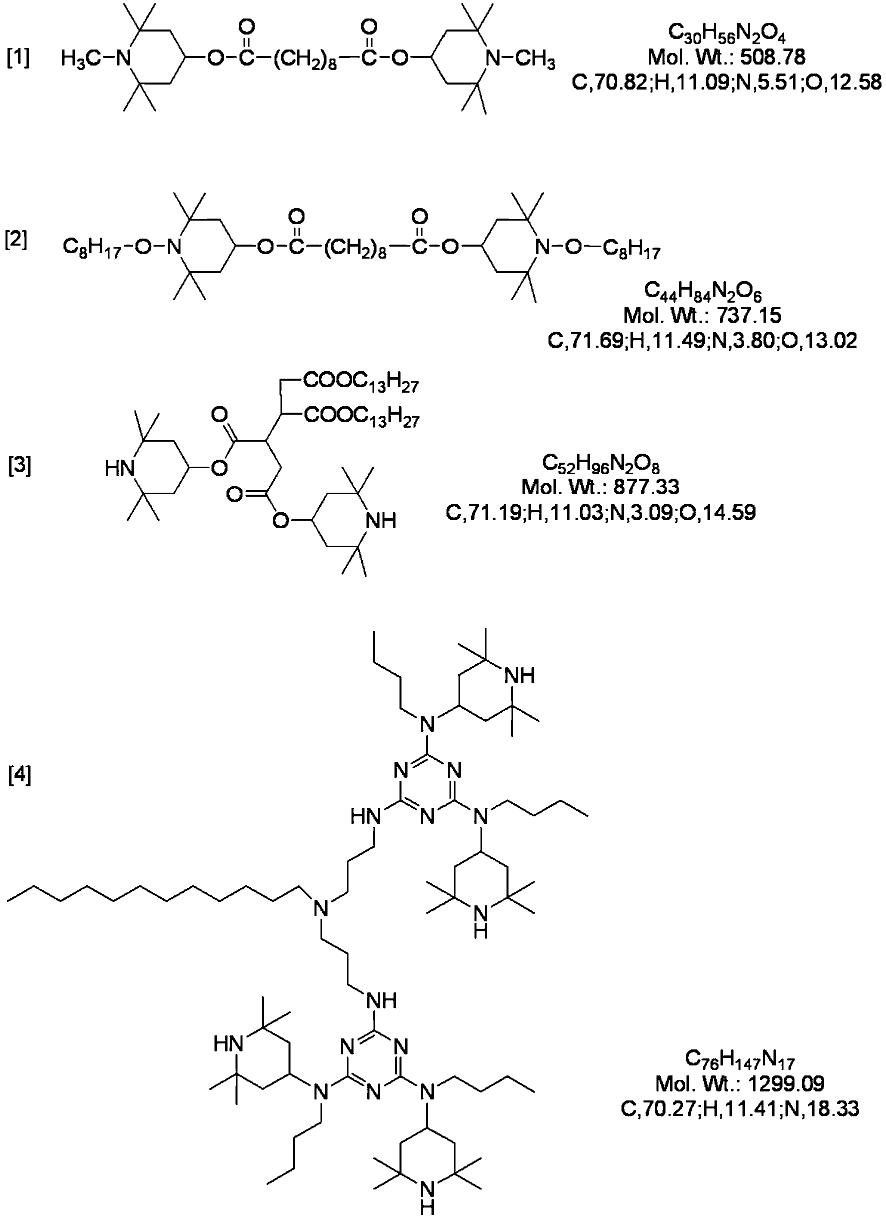

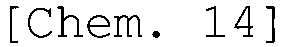

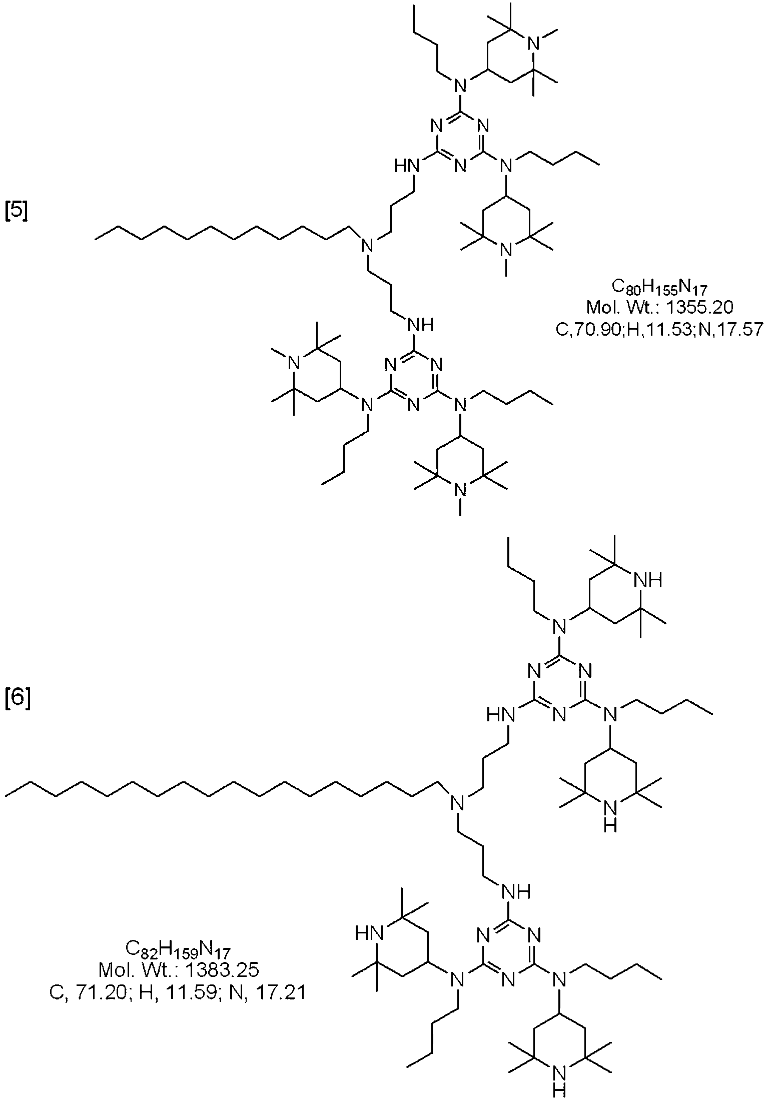

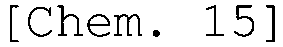

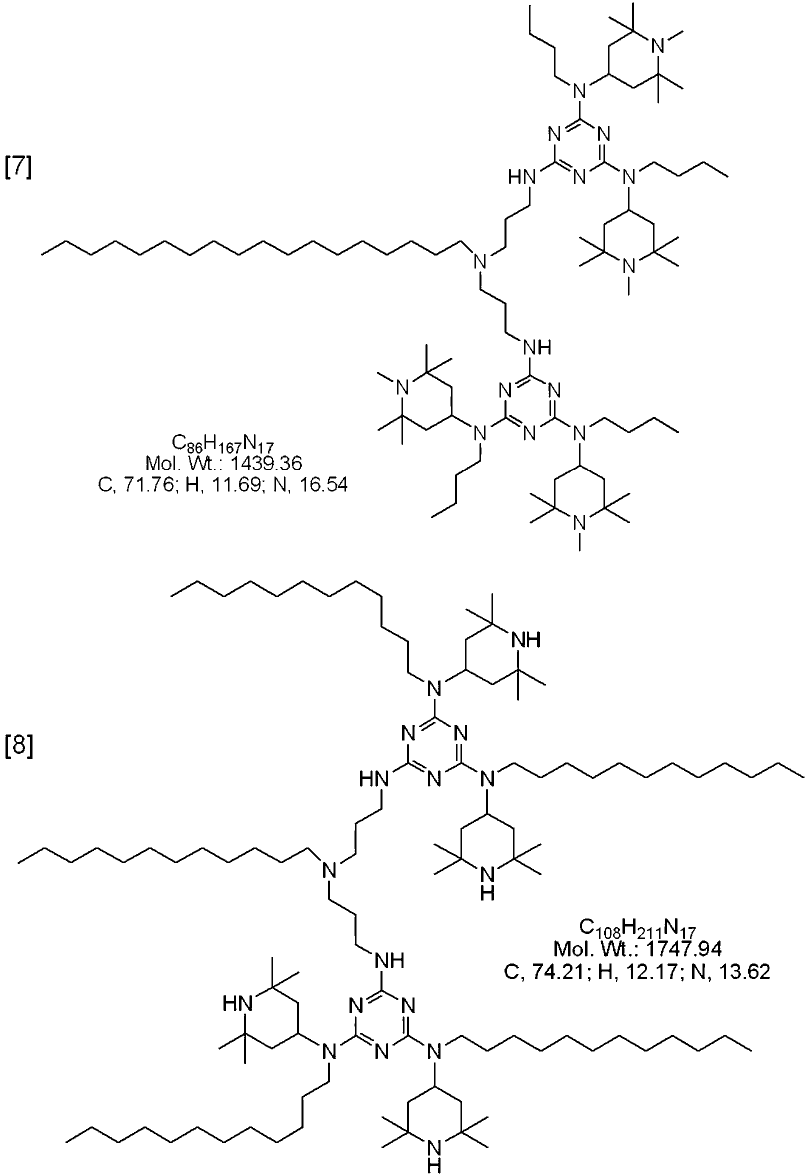

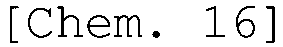

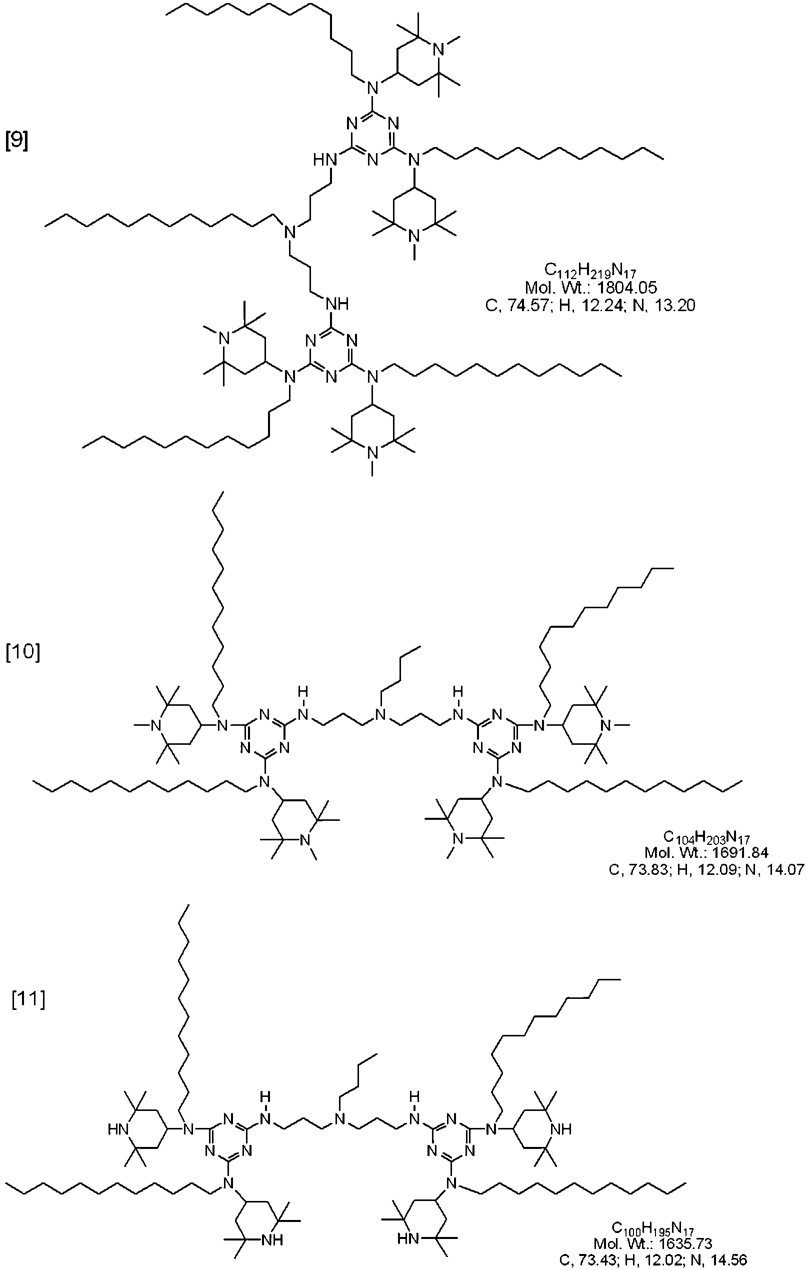

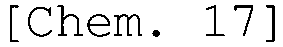

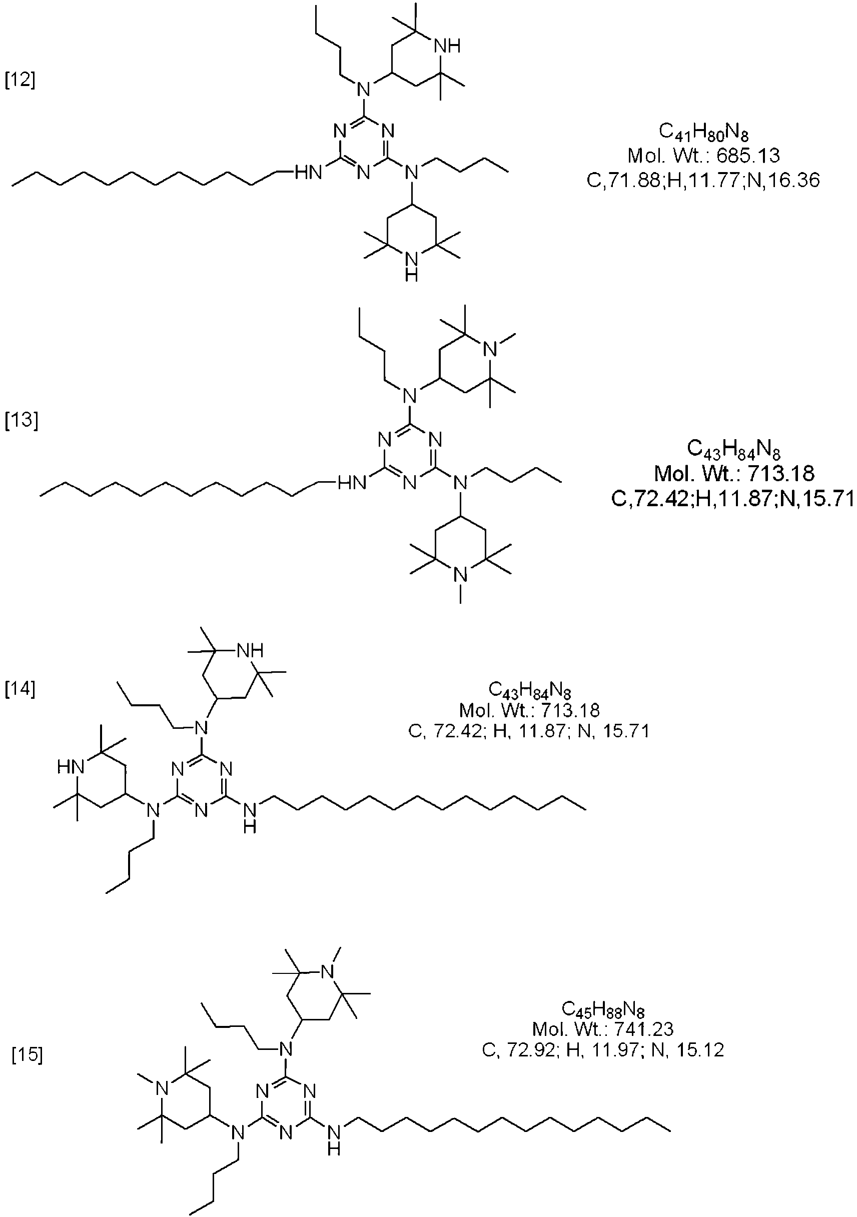

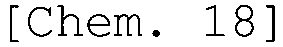

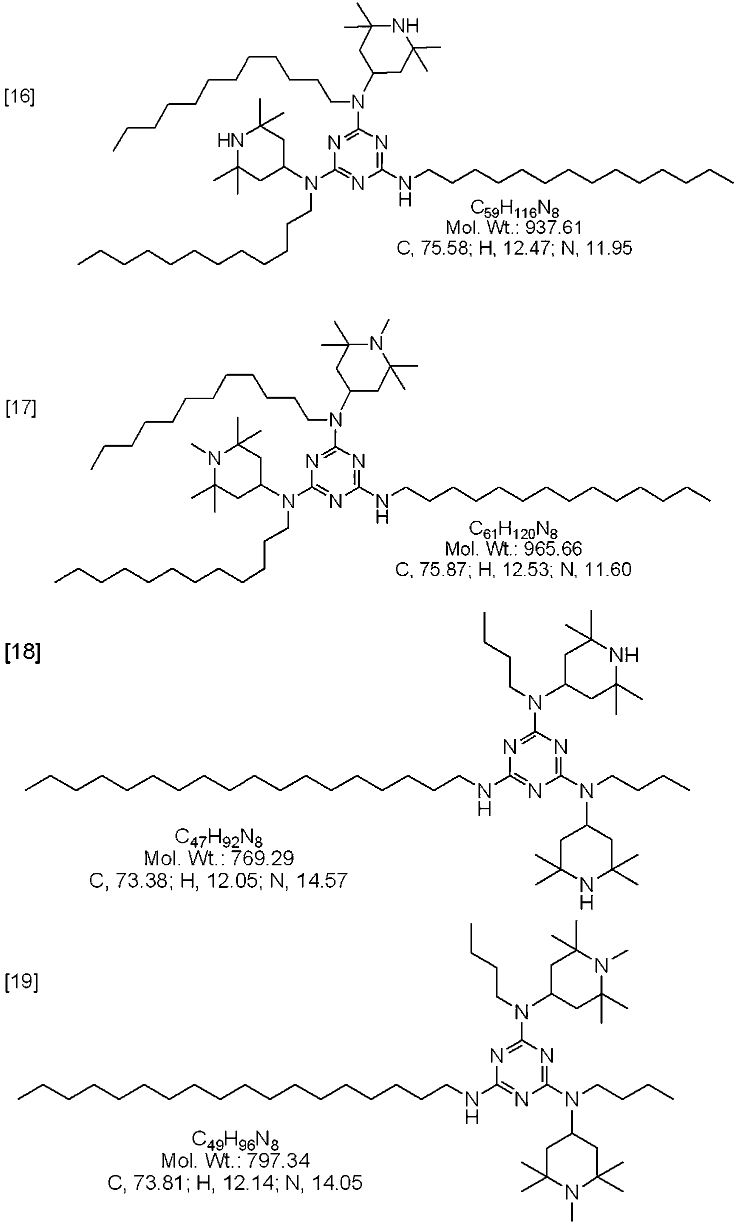

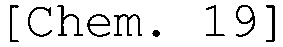

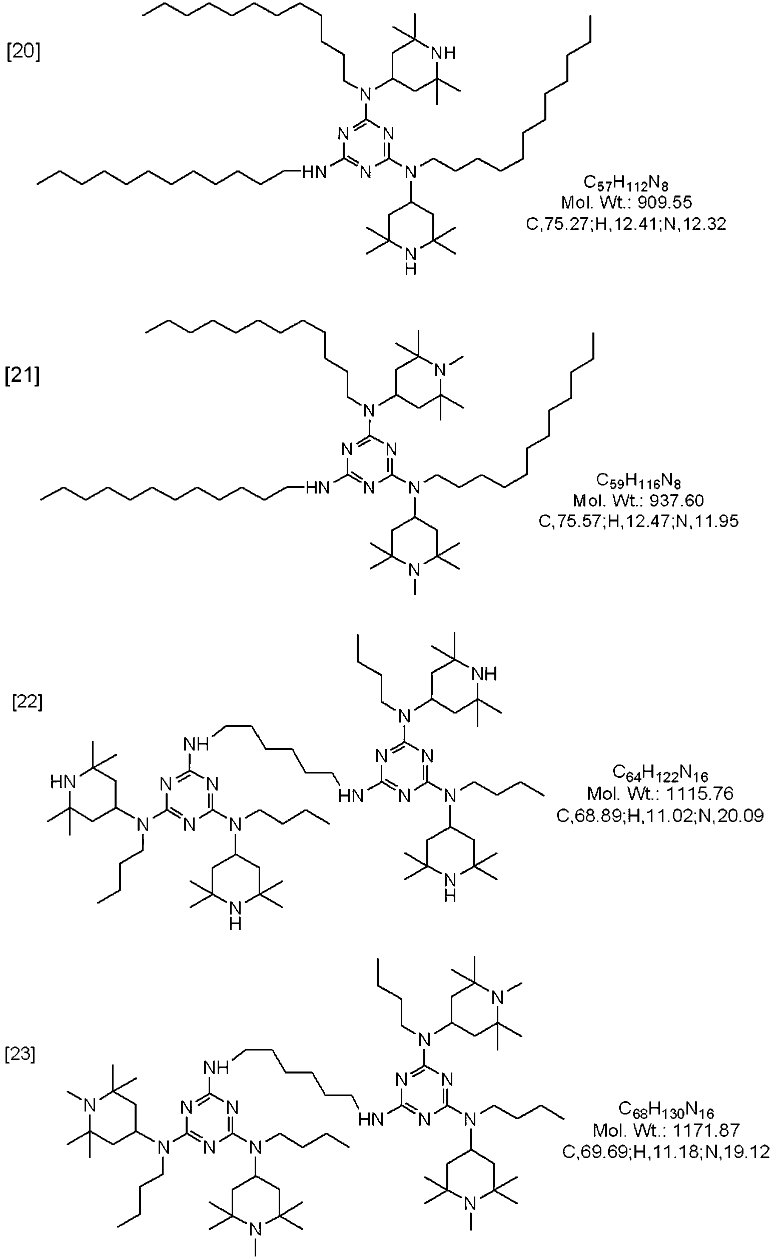

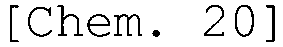

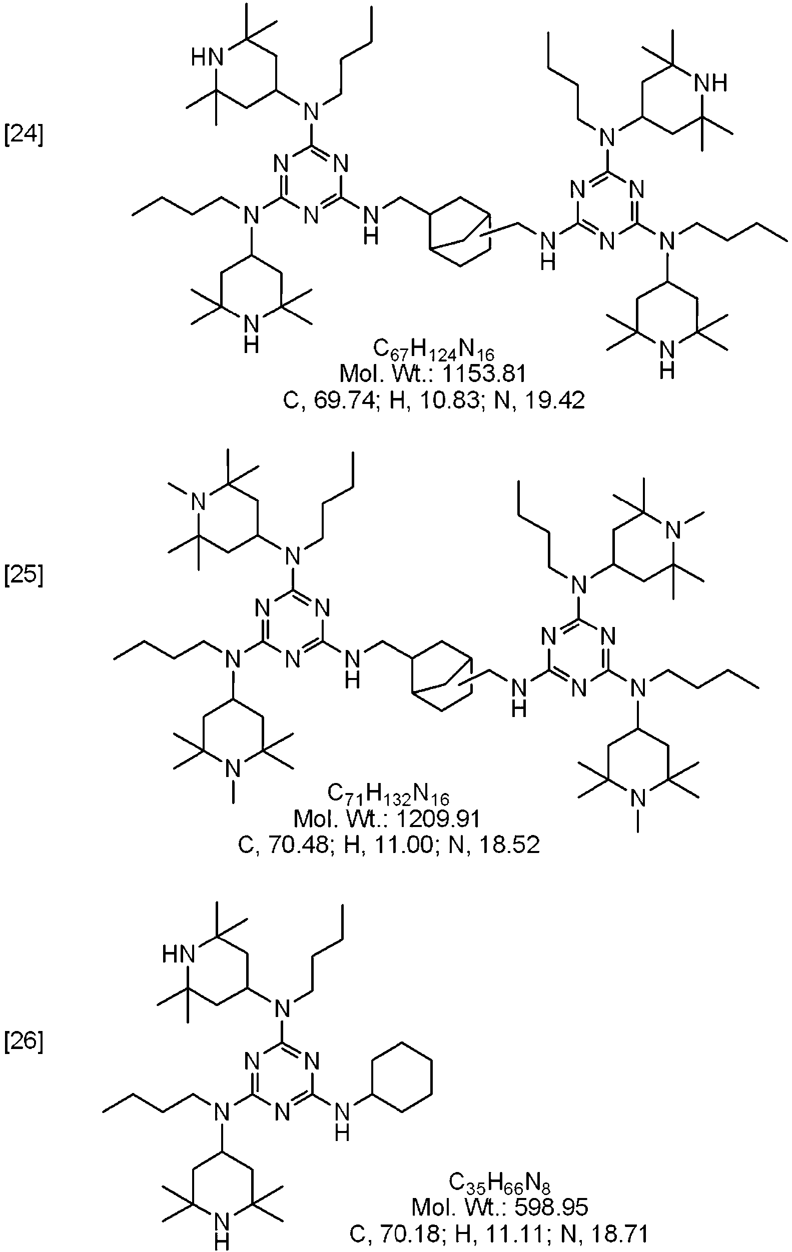

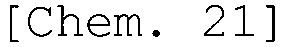

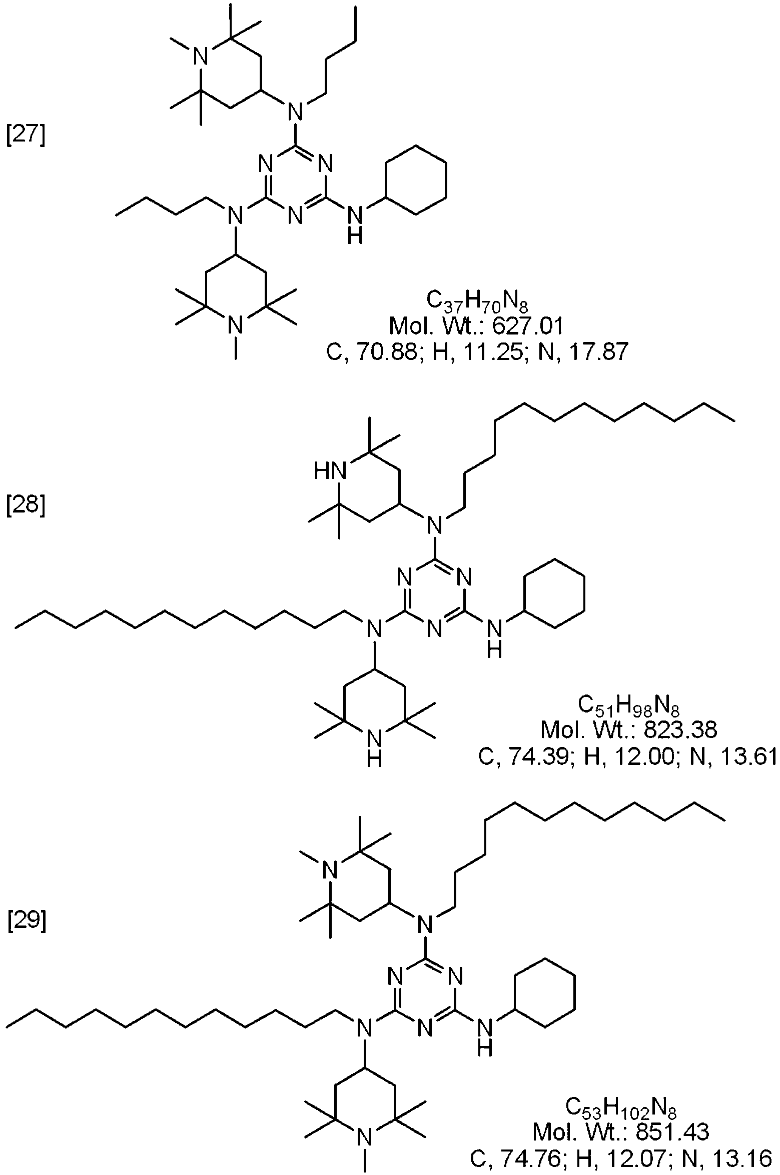

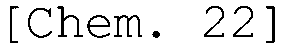

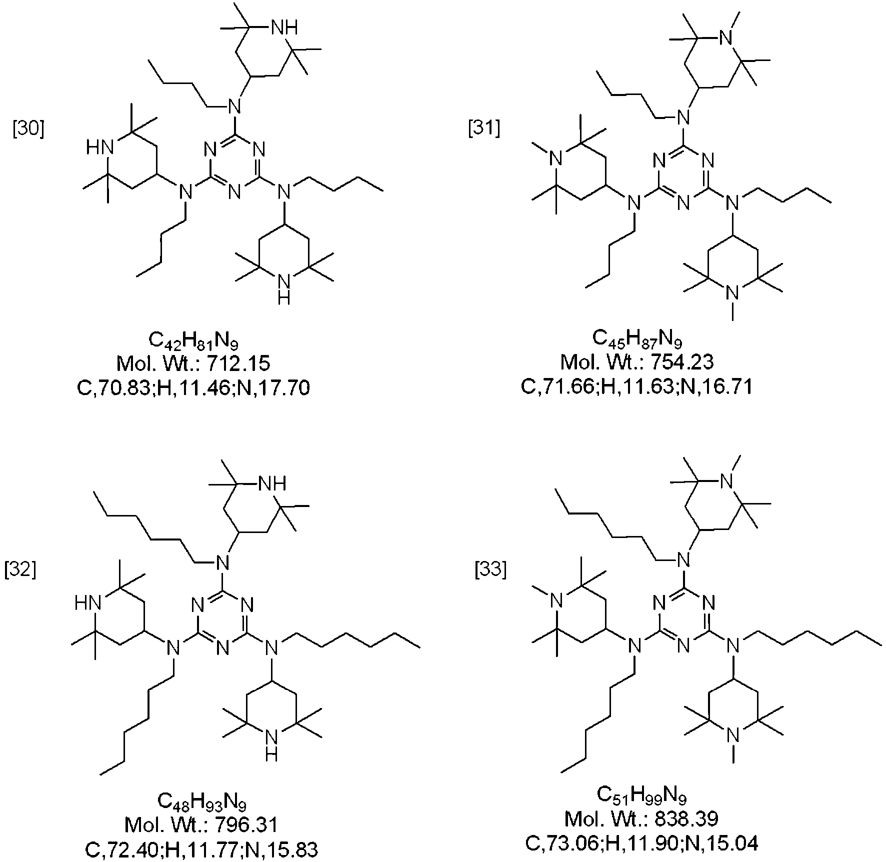

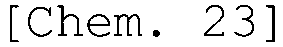

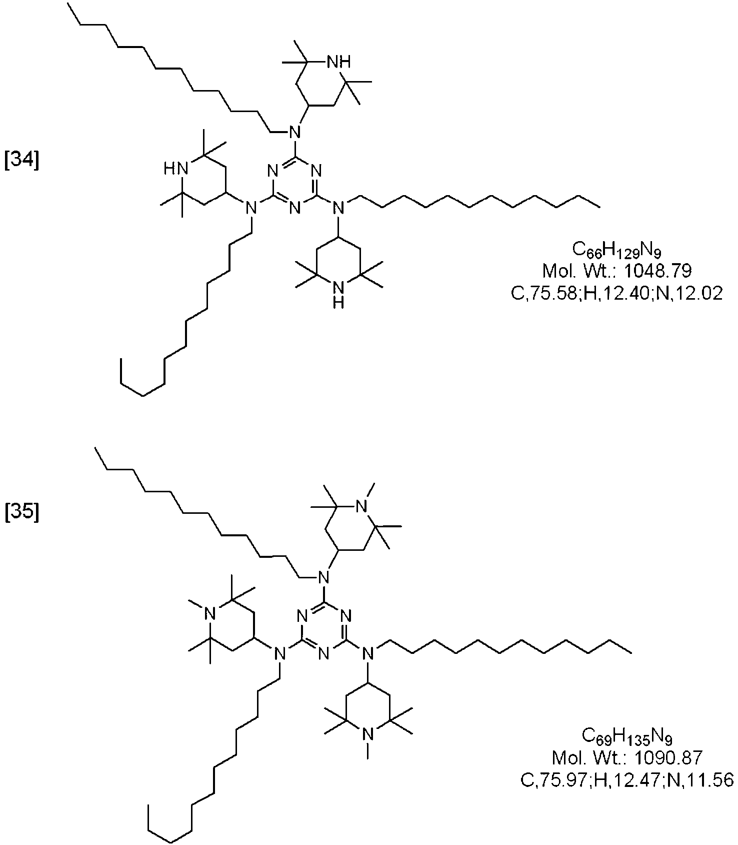

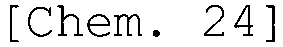

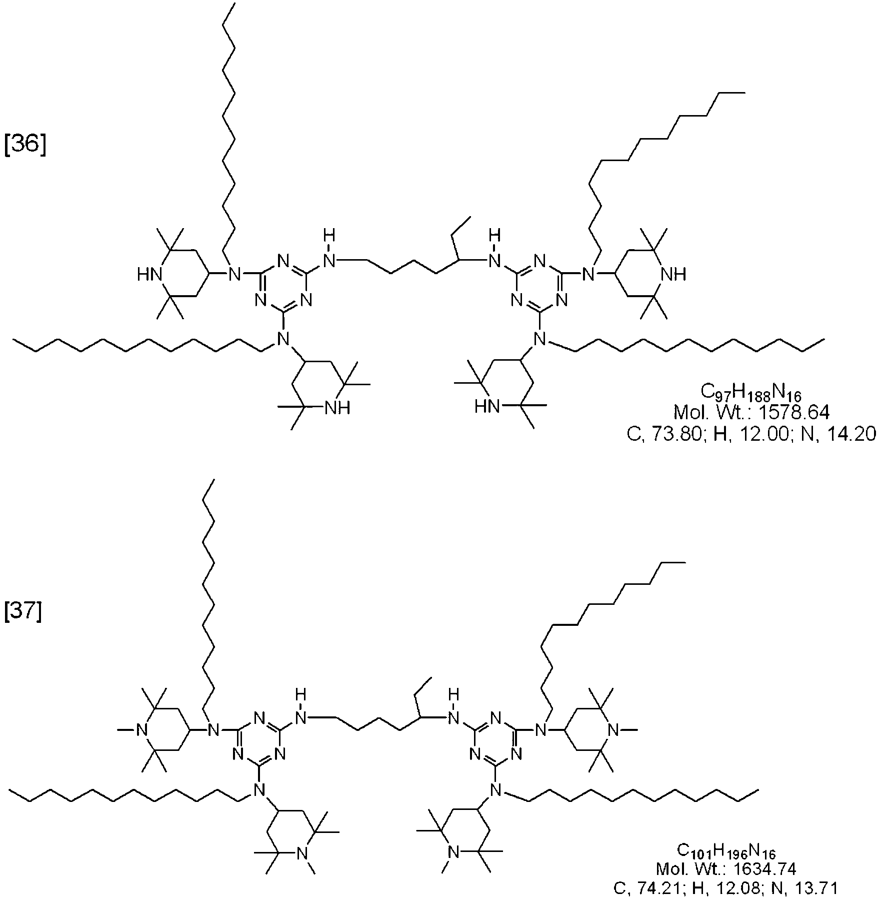

From the viewpoint of improving the light resistance of the obtained resin composition, the solubility of the hindered amine-based compound (D) in 100 g of hexane at 23°C is preferably equal to or more than 25 g, more preferably equal to or more than 50 g, and still more preferably equal to or more than 100 g.

Examples of the hindered amine-based compound (D) satisfying the hexane solubility include the compounds represented by Chemical Formulae [1] to [37].

From the viewpoint of improving the light resistance of the obtained resin composition, the 5% weight reducing temperature at heating of the hindered amine-based compound (D) in a case of being heated at a temperature rising rate of 5°C/min in nitrogen is preferably equal to or higher than 300°C and more preferably equal to or higher than 320°C.

The weight reducing temperature at heating can be measured, for example, by a thermogravimetry/differential thermal analysis (TG/DTA) simultaneous measuring apparatus (for example, DTG-60A/60AH manufactured by Shimadzu Corporation).

The hindered amine-based compound (D) of the present embodiment preferably includes a hindered amine-based compound represented by General Formula (1).

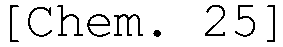

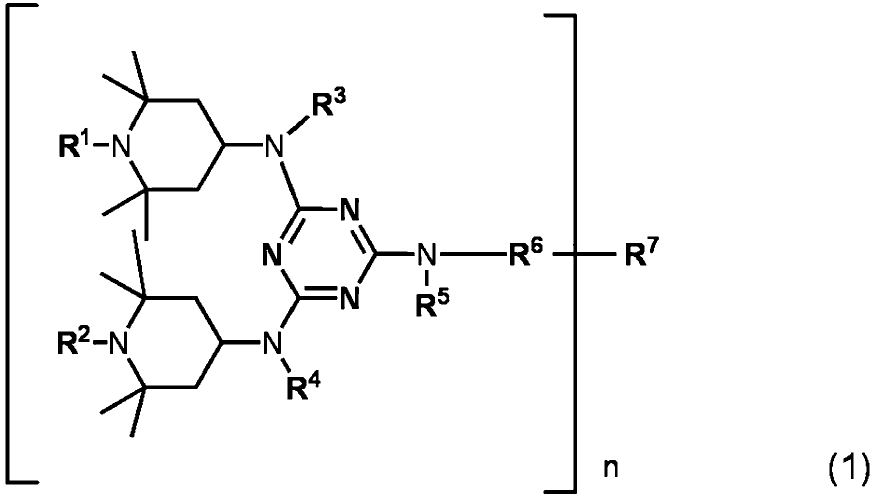

In General Formula (1), n represents 1 or 2.

R¹ and R² may be the same as or different from each other, each represent a hydrogen atom or a methyl group, and are preferably methyl groups. In a case where R¹ and R² are methyl groups, it is possible to prevent the molded body from being colored at a high temperature in the presence of an acidic substance.

R³, R⁴, and R⁵ may be the same as or different from each other, and each can be exemplified by the following (1) to (5).
(1) Hydrogen atom.
(2) Alkyl group having 1 to 24 carbon atoms.
(3) Alicyclic skeleton-containing saturated hydrocarbon group which includes an alicyclic skeleton having 5 to 12 carbon atoms, in which the alicyclic skeleton may have 1 to 3 alkyl substituents each having 1 to 4 carbon atoms.
(4) Group represented by -R^{A}-Ph(-R^{B})p (in the formula, R^{A} represents an alkylene group having 1 to 3 carbon atoms, Ph represents a substituted or unsubstituted phenyl group which may be substituted with an alkyl group having 1 to 4 carbon atoms represented by R^{B}, and p is an integer of 0 to 3).
(5) Substituted alkyl group having 2 to 4 carbon atoms, which has at least one substituent on a carbon atom other than the carbon atom to which a nitrogen atom is directly bonded, in which the substituent is selected from an OH group, an alkoxy group having 1 to 8 carbon atoms, and a dialkylamino group (a plurality of the alkyl groups may be the same as or different from each other, and are each an alkyl group having 1 to 4 carbon atoms).

In the above (3), as the alicyclic skeleton-containing saturated hydrocarbon group, a cycloalkyl group having 5 to 12 carbon atoms, which is unsubstituted or has 1 to 3 alkyl groups having 1 to 4 carbon atoms and the like can be used.

R³, R⁴, and R⁵ may be the same as or different from each other, but (1) a hydrogen atom, (2) an alkyl group having 1 to 24 carbon atoms or (3) a cycloalkyl group having 5 to 12 carbon atoms, which is unsubstituted or has 1 to 3 alkyl groups having 1 to 4 carbon atoms, can be preferably used. By using such a group as R³, R⁴, and R⁵, the transmittance on the short wavelength side is improved, and thus the resin composition can be particularly suitably used for an optical component application.

R⁶ represents an alkylene group having 1 to 4 carbon atoms or a single bond.

R⁷ may be the same as or different from each other, and examples thereof include the following (1) to (7).
(1) Hydrogen atom.
(2) Aliphatic saturated hydrocarbon group having 1 to 17 carbon atoms.
(3) Alicyclic skeleton-containing saturated hydrocarbon group which includes an alicyclic skeleton having 5 to 12 carbon atoms, in which the alicyclic skeleton may have 1 to 3 alkyl substituents having 1 to 4 carbon atoms.
(4) Group represented by -R^{7A}-Ph(-R^{7B})p (in the formula, R^{7A} represents a divalent or trivalent saturated hydrocarbon group having 1 to 3 carbon atoms, Ph represents a phenyl group which may be unsubstituted or substituted with an alkyl group having 1 to 4 carbon atoms represented by R^{7B}, and p is an integer of 0 to 3).
(5) N,N-dialkylamino group represented by -N(R^{7F})(R^{7G}) (in the formula, R^{7F} and R^{7G} each independently represent an alkyl group having 1 to 18 carbon atoms), or a group represented by -N(R^{7F})-(in the formula, R^{7F} represents an alkyl group having 1 to 18 carbon atoms, and - represents a bonding site).
(6) Substituted aliphatic saturated hydrocarbon group having 2 to 4 carbon atoms, which has at least one substituent on a carbon atom other than the carbon atom to which R⁶ is directly bonded, in which the substituent is selected from an OH group, an alkoxy group having 1 to 8 carbon atoms, and a dialkylamino group (a plurality of the alkyl groups may be the same as or different from each other and are each an alkyl group having 1 to 4 carbon atoms).
(7) Group represented by the following formula: 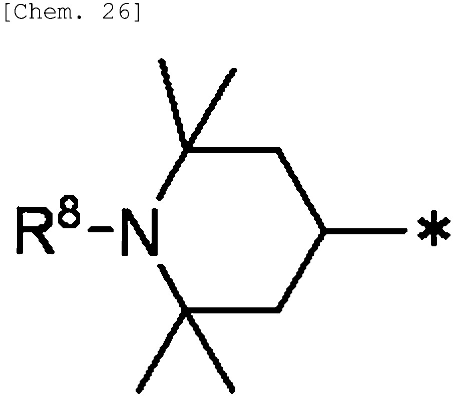 (R⁸ is a hydrogen atom or a methyl group, and * represents a bonding site).

In the above (2), the aliphatic saturated hydrocarbon group having 1 to 17 carbon atoms represents a hydrogen atom or an alkyl group having 1 to 17 carbon atoms in a case of n = 1, and represents an alkylene group having 1 to 17 carbon atoms in a case of n = 2.

In addition, in the above (3), the alicyclic skeleton-containing saturated hydrocarbon group is a monovalent group in a case of n = 1, and a divalent group in a case of n = 2. The monovalent group includes, for example, a cyclohexyl group, and the divalent group includes, for example, 1,2-cyclohexylene, 1,3-cyclohexylene and 1,4-cyclohexylene.

Further, in the above (6), the substituted aliphatic saturated hydrocarbon group has a substituent on a carbon atom other than the carbon atom to which a nitrogen atom is directly bonded in a case where R⁶ is a single bond.

As R⁷ in General Formula (1), in a case of n = 1, (1) a hydrogen atom, (2) an alkyl group having 1 to 17 carbon atoms, (3) a cycloalkyl group having 5 to 12 carbon atoms which is unsubstituted or has 1 to 3 alkyl groups having 1 to 4 carbon atoms, (5) an N,N-dialkylamino group represented by -N(R^{7F})(R^{7G}) (in the formula, R^{7F} and R^{7G} each independently represent an alkyl group having 1 to 18 carbon atoms), and (7) a group represented by the above formula can be preferably used. On the other hand, in a case of n = 2, as R⁷, (2) an alkylene group having 1 to 17 carbon atoms, (3) a cycloalkylene group having 5 to 12 carbon atoms, which is unsubstituted or has 1 to 3 alkyl groups having 1 to 4 carbon atoms, and (5) a group represented by -N(R^{7F})- (in the formula, R^{7F} represents an alkyl group having 1 to 18 carbon atoms, and - represents a bonding site) can be preferably used.

By using such a group as R⁷, the transmittance on the short wavelength side is improved, and thus the resin composition can be particularly suitably used for an optical component application.

Examples of the hindered amine-based compound represented by General Formula (1) include the compounds represented by Chemical Formulae [4] to [37].

In addition, as the hindered amine-based compound represented by General Formula (1), a hindered amine-based compound represented by General Formula (2) can be used. By using this hindered amine-based compound, the coloration of the molded body at a high temperature can be suppressed.

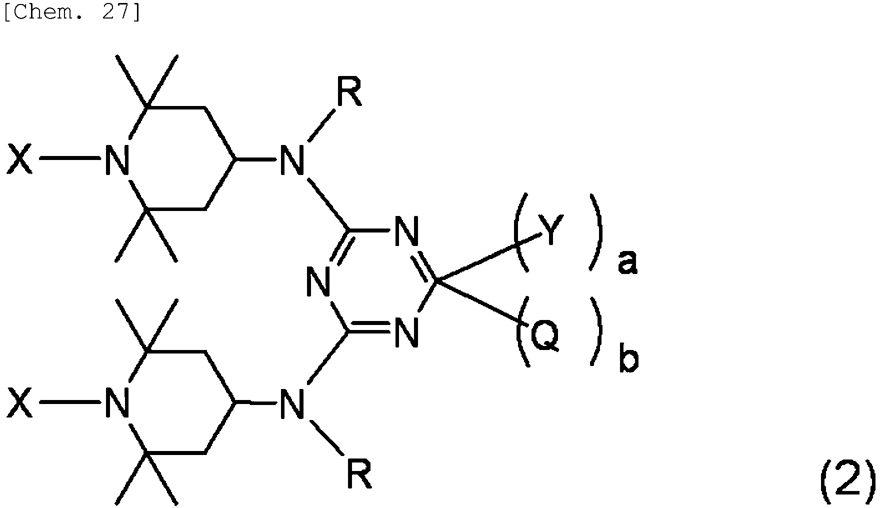

[In Formula (2), a and b are each 0 or 1, and satisfy a + b = 1.

R represents an alkyl group having 1 to 24 carbon atoms.

Y represented by the following General Formula: 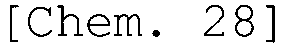 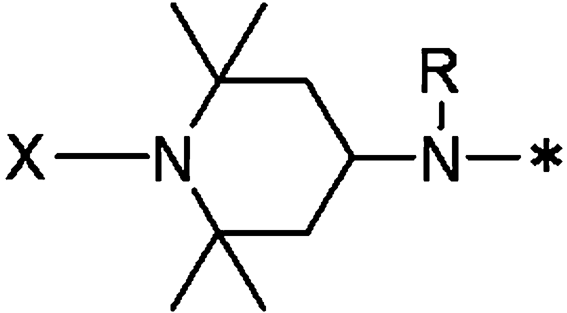 (where X in the formula represents a hydrogen atom or a methyl group, R represents an alkyl group having 1 to 24 carbon atoms, and * represents a bonding site).

Q is represented by the following General Formula: 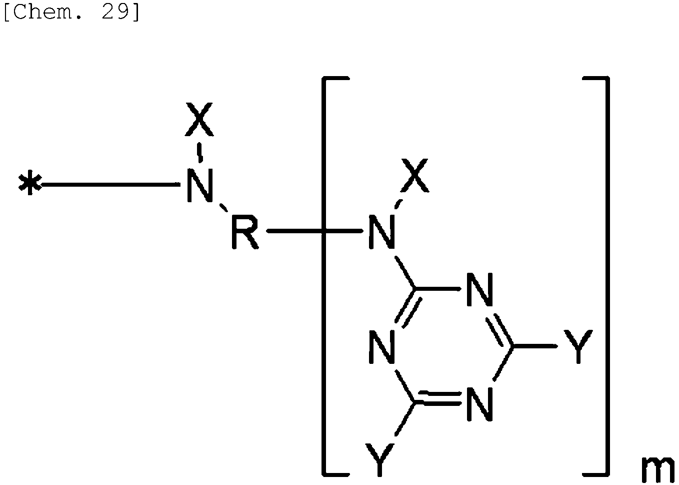 (in the formula, m is 0 or 1, and X and Y are the same as described above. R represents an alkyl group having 1 to 24 carbon atoms in a case of m = 0, and represents an alkylene group having 1 to 24 carbon atoms in a case of m = 1. * represents a bonding site).

A plurality of X, Y, and R may be the same as or different from each other].

Examples of the hindered amine-based compound represented by General Formula (2) include compounds represented by Chemical Formulae [12] to [37].

From the viewpoint of improving the light resistance of the obtained resin composition, with respect to 100 parts by mass of the cyclic olefin-based copolymer (A), the content of the hindered amine-based compound (D) in the resin composition of the present embodiment is preferably equal to or more than 0.05 parts by mass and equal to or less than 3.0 parts by mass, more preferably equal to or more than 0.10 parts by mass and equal to or less than 2.5 parts by mass, and still more preferably equal to or more than 0.15 parts by mass and equal to or less than 2.3 parts by mass.

The hindered amine-based compound (D) can be produced, for example, by appropriately selecting conditions according to the methods described in Japanese Unexamined Patent Publication No. S52-73886, Japanese Unexamined Patent Publication No. S63-286448, Japanese Unexamined Patent Publication No. H05-9356, Japanese Unexamined Patent Publication No. H05-43745, and the like.

### [Other Components]

The resin composition of the present embodiment can include a known additive as any component in addition to the cyclic olefin-based copolymer (A) and the fatty acid ester composition (B), within a range that does not impair good properties of the resin composition of the present embodiment.

The additive includes, for example, antioxidants, secondary antioxidants, lubricants, mold release agents, antifogging agents, weather stabilizers, light stabilizers, ultraviolet absorbers, metal inactivating agents, and the like.

In the resin composition of the present embodiment, the upper limit value of the internal haze measured by the following (Method) is preferably equal to or less than 0.4% and more preferably equal to or less than 0.3%. In a case where the internal haze is equal to or less than the above-described upper limit value, the performance balance of moisture-heat resistance and transparency can be further improved in the molded body and the optical component formed using the resin composition of the present embodiment.

In addition, the lower limit value of the internal haze is not particularly limited, but is, for example, equal to or more than 0.0%, and may be equal to or more than 0.1%.

In addition, in the resin composition according to the present embodiment, the internal haze measured by the following (Method) is preferably equal to or more than 0.0% and equal to or less than 0.4%, and more preferably equal to or more than 0.1% and equal to or less than 0.3%, from the viewpoint of further improving the performance balance of moisture-heat resistance and transparency in the molded body and the optical component formed using the resin composition according to the present embodiment.

### (Method)

Using an injection molding machine, the above-described resin composition is injection-molded under conditions of a cylinder temperature of 270°C and a mold temperature of 126°C, and a test piece with an optical surface of 35 mm × 65 mm × 10 mm in thickness is prepared. The internal haze of the injection-molded test piece is measured with a haze meter using benzyl alcohol based on JIS K 7136: 2000.

The resin composition according to the present embodiment can be obtained by a method of melt-kneading the cyclic olefin-based copolymer (A) and the fatty acid ester composition (B) using a known kneading apparatus such as an extruder and a Banbury mixer; a method of dissolving the cyclic olefin-based copolymer (A) and the fatty acid ester composition (B) in a common solvent and then evaporating the solvent; a method of adding a solution of the cyclic olefin-based copolymer (A) and the fatty acid ester composition (B) to a poor solvent to precipitate the solution; and the like.

In the resin composition of the present embodiment, the method of mixing the cyclic olefin-based copolymer (A), the fatty acid ester composition (B) and the fatty acid metal salt (C) or the cyclic olefin-based copolymer (A), the fatty acid ester composition (B), the fatty acid metal salt (C) and the hindered amine-based compound (D) is not particularly limited, and the components may be pre-compounded using an extruder or the like, or the components may be dry blended and put into an extruder or the like.

In addition, the resin composition may be prepared by pre-compounding the cyclic olefin-based copolymer (A) and the fatty acid ester composition (B) and the fatty acid metal salt (C) powder may be added to the resin composition after molding. The resin composition may be prepared by pre-compounding the cyclic olefin-based copolymer (A), the fatty acid ester composition (B) and the hindered amine-based compound (D), and the fatty acid metal salt (C) powder may be added to the resin composition after molding.

### <Molded Body and Optical Component>

Next, the molded body according to the present embodiment will be described.

The molded body according to the present embodiment includes the resin composition according to the present embodiment. Therefore, the molded body according to the present embodiment has an improved performance balance of moisture-heat resistance and transparency.

The molded body according to the present embodiment can be suitably used as an optical component in an optical system that requires highly accurate identification of images. The optical component is a component used in optical system equipment, and the like, and specific examples of the optical component include lenses for various sensors, pickup lenses, projector lenses, prisms, fθ lenses, imaging lenses, light guide plates, head mount display lenses, and the like. From the viewpoint of the effect according to the present embodiment, the molded body according to the present embodiment can be suitably used for an fθ lens, an imaging lens, a sensor lens, a prism or a light guide plate.

A method of obtaining a molded body by molding the resin composition of the present embodiment is not particularly limited, and a known method can be used. Depending on applications and shapes, for example, extrusion molding, injection molding, inflation molding, blow molding, extrusion blow molding, injection blow molding, press molding, vacuum molding, powder slush molding, calendar molding, foam molding, and the like can be applied. Among these, an injection molding method is preferable from the viewpoint of moldability and productivity. Molding conditions are appropriately selected depending on the purpose of use or molding methods, and for example, a resin temperature in the injection molding is appropriately selected, for example, within a range of 150°C to 400°C, preferably 200°C to 350°C, and more preferably 230°C to 330°C.

Although the embodiments of the present invention have been described above, these are examples of the present invention, and various configurations other than the above can be adopted.

In addition, the present invention is not limited to the above-described embodiments, and modifications, improvements, and the like within a range in which the object of the present invention can be achieved are included in the present invention.

### [Examples]

Hereinafter, the present invention will be described in more detail with reference to Examples, but the present invention is not limited thereto.

### [Example 1]

### <Polymerization of Cyclic Olefin-Based Copolymer (A)>

### (Preparation of Catalyst)

Ethylaluminum sesquichloride (Al(C₂H₅)_{1.5}Cl_{1.5}) was diluted with cyclohexane as a solvent to prepare an organoaluminum compound catalyst.

### (Polymerization)

A copolymer solution was obtained by continuously performing a copolymerization reaction of ethylene and tetracyclo[4.4.0.1^{2,5}.1^{7,10}]-3-dodecene using a stirring type polymerization apparatus. Here, as the catalyst, the organic aluminum compound catalyst solution prepared in the section of (Preparation of Catalyst) was used, and ethylene was supplied into the polymerization apparatus together with hydrogen gas.

### (Demineralization)

Water and an aqueous sodium hydroxide solution were added to the obtained copolymer solution to stop the polymerization reaction, and the catalyst residue present in the copolymer solution was removed (demineralized). To the demineralized copolymer solution, pentaerythrityl-tetrakis[3-(3,5-di-t-butyl-4-hydroxyphenyl)propionate] was added as a stabilizer, and the mixture was mixed in a stirring tank for 1 hour.

### (Desolventation)

The solution obtained by adding the stabilizer and mixing was heated to 180°C to remove the solvent and the unreacted monomer, thereby obtaining a cyclic olefin-based copolymer (A) in a molten state (a random copolymer of ethylene and tetracyclo[4.4.0.1^{2,5}.1^{7,10}]-3-dodecene).

In a case where an entirety of the repeating units constituting the cyclic olefin-based copolymer (A) was set to 100 mol%, the content of the repeating unit (repeating unit (a)) derived from ethylene was 62 mol%, and the content of the repeating unit (repeating unit (b)) derived from tetracyclo[4.4.0.1^{2,5}.1^{7,10}]-3-dodecene was 38 mol%.

In this case, the contents of the repeating unit (repeating unit (a)) derived from ethylene and the repeating unit (repeating unit (b)) derived from tetracyclo[4.4.0.1^{2,5}.1^{7,10}]-3-dodecene which constitute the cyclic olefin-based copolymer (A) were measured under the following conditions using a "ECA500" nuclear magnetic resonance apparatus manufactured by JEOL Ltd.
Solvent: Deutetrachloroethane
Sample concentration: 50 to 100 g/l-solvent
Pulse repetition time: 5.5 seconds
Cumulated number: 6,000 to 16,000 times
Measurement temperature: 120°C

The contents of the repeating unit (repeating unit (a)) derived from ethylene and the repeating unit (repeating unit (b)) derived from tetracyclo[4.4.0.1^{2,5}.1^{7,10}]-3-dodecene which constitute the cyclic olefin-based copolymer (A) were quantified by the ¹³C-NMR spectrum measured under the above-described conditions.

### <Synthesis of Hindered Amine-Based Compound>

A hindered amine-based compound (D-1) represented by Chemical Formula [35] (N,N',N"-tridodecyl-N,N',N"-tris-(1,2,2,6,6-pentamethyl-4-piperidinyl)-[1,3,5]-triazine-2,4,6-triamine (T12M)) was synthesized by the following method.

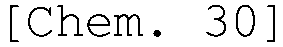

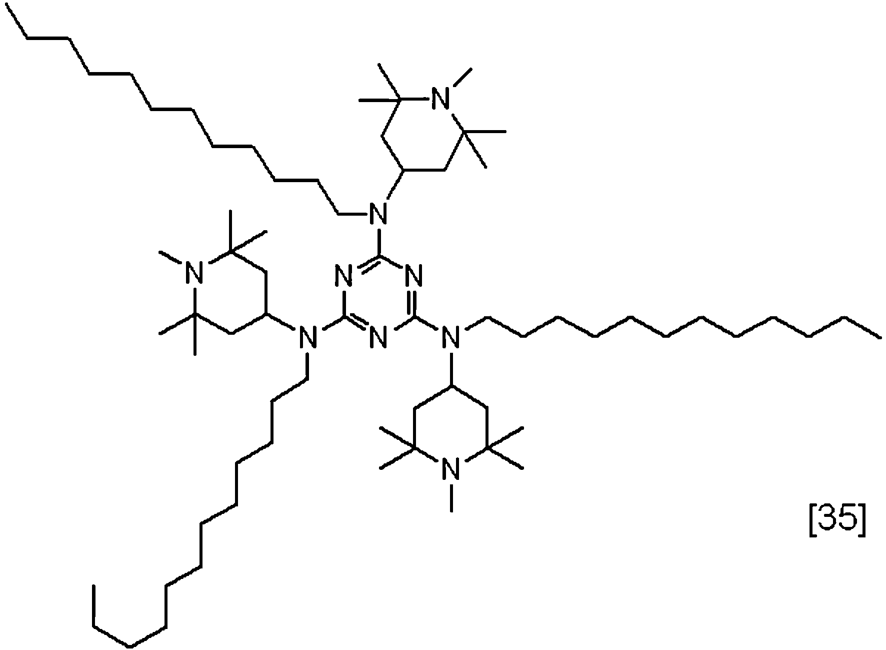

### (1) Synthesis of N-dodecyl-2,2,6,6-tetramethylpiperidine-4-amine (TADA)

77.6 g (0.5 mol) of 2,2,6,6-tetramethyl-4-piperidone (TAA), 97.3 g (0.525 mol) of dodecylamine, and 2.3 g of 2% platinum carbon (50% water content) were charged into 77.6 g of methanol, and the mixture was allowed to undergo a reaction at a hydrogen pressure of 0.3 MPa and 50°C for 2.5 hours. The catalyst was removed by filtration, and then desolvented, and distilled to obtain 144.4 g of TADA as a yellowish liquid (yield: 89%).

### (2) Synthesis of N,N',N"-tridodecyl-N,N',N"-tris-(2,2,6,6-tetramethyl-4-piperidinyl)-[1,3,5]-triazine-2,4,6-triamine (TTADA)

194.8 g (0.6 mol) of TADA synthesized in the above (1) and 27.5 g (0.66 mol) of 96% sodium hydroxide were charged into 115 g of water, and heated to a temperature of 60°C, and 55.3 g (0.3 mol) of cyanuric chloride dissolved in 210 g of toluene was then added dropwise thereto over 1 hour. Then, the mixture was aged for 3 hours. The mixture was separated, and washed with water twice, and a toluene solution of the reaction product was obtained. Thereafter, toluene was distilled off from the toluene solution of the reaction product, and 274 g of dimethylacetamide (DMAc) and 21.8 g (0.16 mol) of potassium carbonate were charged. After the charging, the mixture was heated to a temperature of 150°C, and 97.4 g (0.3 mol) of TADA dissolved in 97.4 g of DMAc was then added dropwise thereto over 2 hours. Then the mixture was aged for 18 hours under reflux. The reaction mass was cooled, and then discharged into water added with 3.8 g (0.09 mol) of 96% sodium hydroxide. The reaction product was extracted with toluene, and further washed with water twice to obtain a solution of TTADA in toluene.

### (3) Synthesis of N,N',N"-tridodecyl-N,N',N"-tris-(1,2,2,6,6-pentamethyl-4-piperidin-4-yl)-[1,3,5]-triazine-2,4,6-triamine (T12M)

35.1 g (1.17 mol) of paraformaldehyde was charged into the solution of TTADA in toluene synthesized in the above (2), and heated to a temperature of 80°C. After the heating, 49.7 g (1.08 mol) of formic acid was added dropwise thereto over 1 hour, and the mixture was aged for 3 hours. After cooling the reaction mass, the mixture was washed with 125 g of water containing 7.9 g (0.19 mol) of 96% sodium hydroxide, and the washing with water was further carried out twice. The obtained toluene solution was purified by silica gel column chromatography and then concentrated to obtain 291.3 g of T12M as a viscous solution (yield: 89%/TCTA).

### <Production of Resin Composition>

### (Extrusion)

100 parts by mass of the cyclic olefin-based copolymer (A) and 2.3 parts by mass of a fatty acid ester composition (Ba) (content of pentaerythritol (B-1) in the fatty acid ester composition (Ba): 0.5% by mass) which includes pentaerythritol (B-1) and a fatty acid ester (B-2) of pentaerythritol (a mixture of pentaerythritol monostearate: 32% by mass, pentaerythritol distearate: 45% by mass, and pentaerythritol tristearate: 23% by mass) were kneaded and pelletized. The obtained pellets were dried with hot air at a temperature of 100°C for 4 hours, and the obtained product was used as a resin composition. The glass transition temperature (Tg) of the resin composition was 137°C.

### [Example 2]

A resin composition was prepared in the same method as in Example 1, except that the fatty acid ester composition (Ba) in Example 1 was changed to a fatty acid ester composition (Bb) (content of pentaerythritol (B-1) in the fatty acid ester composition (Bb): 1.5% by mass) which includes pentaerythritol (B-1) and a fatty acid ester (B-2) of pentaerythritol (a mixture of pentaerythritol monostearate: 32% by mass, pentaerythritol distearate: 45% by mass, and pentaerythritol tristearate: 23% by mass). The glass transition temperature (Tg) of the resin composition was 137°C.

### [Example 5]

A resin composition was prepared in the same method as in Example 1, except that the fatty acid ester composition (Ba) in Example 1 was changed to a fatty acid ester composition (Bd) (content of pentaerythritol (B-1) in the fatty acid ester composition (Bd): 2.5% by mass) which includes pentaerythritol (B-1) and a fatty acid ester (B-2) of pentaerythritol (a mixture of pentaerythritol monostearate: 32% by mass, pentaerythritol distearate: 45% by mass, and pentaerythritol tristearate: 23% by mass). The glass transition temperature (Tg) of the resin composition was 137°C.

### [Example 6]

A resin composition was prepared by the same method as in Example 1, except that the fatty acid ester composition (Ba) in Example 1 was changed to a fatty acid ester composition (Be) (content of pentaerythritol (B-1) in the fatty acid ester composition (Be): 4.5% by mass) which includes pentaerythritol (B-1) and a fatty acid ester (B-2) of pentaerythritol (a mixture of pentaerythritol monostearate: 32% by mass, pentaerythritol distearate: 45% by mass, and pentaerythritol tristearate: 23% by mass). The glass transition temperature (Tg) of the resin composition was 137°C.

### [Example 7]

A resin composition was prepared in the same manner as in Example 6, except that 0.04 parts by mass of zinc stearate (C-1) was added in the extrusion step. The glass transition temperature (Tg) of the resin composition was 137°C.

### [Example 8]

A resin composition was prepared by the same method as in Example 1, except that 0.001 parts by mass of calcium stearate (C-2) was added in the extrusion step. The glass transition temperature (Tg) of the resin composition was 137°C.

### [Example 9]

A resin composition was prepared by the same method as in Example 1, except that 0.6 parts by mass of a hindered amine compound ((D-1), compound name: N,N',N"-tridodecyl-N,N',N"-tris-(1,2,2,6,6-pentamethyl-4-piperidinyl)-[1,3,5]-triazine-2,4,6-triamine (T12M)) was added in the extrusion step. The glass transition temperature (Tg) of the resin composition was 135°C.

### [Example 10]

A resin composition was prepared in the same method as in Example 2, except that 0.04 parts by mass of zinc stearate (C-1) and 0.4 parts by mass of the hindered amine compound (D-1) were added in the extrusion step. The glass transition temperature (Tg) of the resin composition was 136°C.

### [Example 17]

A resin composition was prepared in the same method as in Example 10, except that zinc stearate (C-1) was not added in the extrusion step and 0.04 parts by mass of zinc stearate (C-1) was added after the extrusion step. The glass transition temperature (Tg) of the resin composition was 136°C.

### [Comparative Example 1]

A pelletized resin composition was obtained in the same method as in Example 1, except that the fatty acid ester composition (Ba) was not used in the extrusion step in Example 1. The glass transition temperature (Tg) of the resin composition was 150°C.

### [Comparative Example 2]

A resin composition was prepared in the same method as in Example 1, except that the fatty acid ester composition (Ba) in Example 1 was changed to a fatty acid ester composition (Bc) (content of pentaerythritol (B-1) in the fatty acid ester composition (Bc): 5.5% by mass) which includes pentaerythritol (B-1) and a fatty acid ester (B-2) of pentaerythritol (a mixture of pentaerythritol monostearate: 32% by mass, pentaerythritol distearate: 45% by mass, and pentaerythritol tristearate: 23% by mass). The glass transition temperature (Tg) of the resin composition was 137°C.

### [Comparative Example 5]

A resin composition was prepared in the same method as in Example 1, except that the fatty acid ester composition (Ba) in Example 1 was changed to a fatty acid ester composition (Bf) (content of pentaerythritol (B-1) in the fatty acid ester composition (Bf): 10.5% by mass) which includes pentaerythritol (B-1) and a fatty acid ester (B-2) of pentaerythritol (a mixture of pentaerythritol monostearate: 32% by mass, pentaerythritol distearate: 45% by mass, and pentaerythritol tristearate: 23% by mass). The glass transition temperature (Tg) of the resin composition was 137°C.

### [Example 3]

The demineralized copolymer solution obtained in the same manner as in Example 1 was continuously hydrogenated by using a nickel/diatomaceous earth catalyst (N112 manufactured by Nikki Chemical Co., Ltd.) under the conditions of a reaction temperature of 100°C, a reaction pressure of 1 MPa, and LHSV = 5/hr. To the hydrogenated copolymer solution, pentaerythrityl-tetrakis[3-(3,5-di-t-butyl-4-hydroxyphenyl)propionate] was added as a stabilizer in an amount of 0.4% by mass with respect to the total copolymer solution, and the mixture was mixed in a stirring tank for 1 hour. Then, the solvent was removed in the same method as in Example 1 to obtain a hydrogenated cyclic olefin-based copolymer (Aa).

### (Extrusion)

100 parts by mass of the obtained hydrogenated cyclic olefin-based copolymer (Aa) and 2.0 parts by mass of a fatty acid ester composition (Ba) (content of pentaerythritol (B-1) in fatty acid ester composition (Ba): 0.5% by mass) which includes pentaerythritol (B-1) and a fatty acid ester (B-2) of pentaerythritol (a mixture of pentaerythritol monostearate: 32% by mass, pentaerythritol distearate: 45% by mass, and pentaerythritol tristearate: 23% by mass) were kneaded and pelletized. The obtained pellets were dried with hot air at a temperature of 100°C for 4 hours, and the obtained product was used as a resin composition. The glass transition temperature (Tg) of the resin composition was 139°C.

### [Example 4]

A resin composition was prepared in the same method as in Example 3, except that the fatty acid ester composition (Ba) in Example 3 was changed to a fatty acid ester composition (Bb) (content of pentaerythritol (B-1) in fatty acid ester composition (Bb): 1.5% by mass) which includes pentaerythritol (B-1) and a fatty acid ester (B-2) of pentaerythritol (a mixture of pentaerythritol monostearate: 32% by mass, pentaerythritol distearate: 45% by mass, and pentaerythritol tristearate: 23% by mass). The glass transition temperature (Tg) of the resin composition was 139°C.

### [Example 11]

A resin composition was prepared in the same method as in Example 3, except that the fatty acid ester composition (Ba) in Example 3 was changed to a fatty acid ester composition (Bd) (content of pentaerythritol (B-1) in fatty acid ester composition (Bd): 2.5% by mass) which includes pentaerythritol (B-1) and a fatty acid ester (B-2) of pentaerythritol (a mixture of pentaerythritol monostearate: 32% by mass, pentaerythritol distearate: 45% by mass, and pentaerythritol tristearate: 23% by mass). The glass transition temperature (Tg) of the resin composition was 139°C.

### [Example 12]

A resin composition was prepared in the same method as in Example 3, except that the fatty acid ester composition (Ba) in Example 3 was changed to a fatty acid ester composition (Be) (content of pentaerythritol (B-1) in the fatty acid ester composition (Be): 4.5% by mass) which includes pentaerythritol (B-1) and a fatty acid ester (B-2) of pentaerythritol (a mixture of pentaerythritol monostearate: 32% by mass, pentaerythritol distearate: 45% by mass, and pentaerythritol tristearate: 23% by mass). The glass transition temperature (Tg) of the resin composition was 139°C.

### [Example 13]

A resin composition was prepared in the same method as in Example 12, except that 0.04 parts by mass of zinc stearate (C-1) was added in the extrusion step. The glass transition temperature (Tg) of the resin composition was 139°C.

### [Example 14]

A resin composition was prepared in the same method as in Example 12, except that 0.001 parts by mass of calcium stearate (C-2) was added in the extrusion step. The glass transition temperature (Tg) of the resin composition was 139°C.

### [Example 15]

A resin composition was prepared in the same method as in Example 3, except that 0.6 parts by mass of the hindered amine compound (D-1) was added in the extrusion step. The glass transition temperature (Tg) of the resin composition was 137°C.

### [Example 16]

A resin composition was prepared in the same method as in Example 4, except that 0.04 parts by mass of zinc stearate (C-1) and 0.4 parts by mass of the hindered amine compound (D-1) were added in the extrusion step. The glass transition temperature (Tg) of the resin composition was 138°C.

### [Example 18]

A resin composition was prepared in the same method as in Example 16, except that zinc stearate (C-1) was not added in the extrusion step and 0.04 parts by mass of zinc stearate (C-1) was added after the extrusion step. The glass transition temperature (Tg) of the resin composition was 136°C.

### [Comparative Example 3]

A pelletized resin composition was obtained in the same method as in Example 3, except that the fatty acid ester composition (Ba) was not used in the extrusion step in Example 3. The glass transition temperature (Tg) of the resin composition was 152°C.

### [Comparative Example 4]

A resin composition was prepared in the same method as in Example 3, except that the fatty acid ester composition (Ba) in Example 3 was changed to a fatty acid ester composition (Bc) (content of pentaerythritol (B-1) in fatty acid ester composition (Bc): 5.5% by mass) which includes pentaerythritol (B-1) and a fatty acid ester (B-2) of pentaerythritol (a mixture of pentaerythritol monostearate: 32% by mass, pentaerythritol distearate: 45% by mass, and pentaerythritol tristearate: 23% by mass). The glass transition temperature (Tg) of the resin composition was 139°C.

### [Comparative Example 6]

A resin composition was prepared in the same method as in Example 3, except that the fatty acid ester composition (Ba) in Example 3 was changed to a fatty acid ester composition (Bf) (content of pentaerythritol (B-1) in fatty acid ester composition (Bf): 10.5% by mass) which includes pentaerythritol (B-1) and a fatty acid ester (B-2) of pentaerythritol (a mixture of pentaerythritol monostearate: 32% by mass, pentaerythritol distearate: 45% by mass, and pentaerythritol tristearate: 23% by mass). The glass transition temperature (Tg) of the resin composition was 139°C.

### <Evaluation Method for Resin Composition>

### (Glass Transition Temperature)

The glass transition temperature of the resin composition was measured using a differential scanning calorimeter.

The glass transition temperature (Tg) of the resin composition was measured in a nitrogen atmosphere using a Discovery DSC-2500 manufactured by TA Instruments, Inc.. The resin composition was heated from room temperature (23°C) to 200°C at a temperature rising rate of 10°C/min and held for 5 minutes. Next, the temperature was lowered to -20°C at a temperature lowering rate of 10°C/min, and then held for 5 minutes. Then, the glass transition temperature (Tg) of the resin composition was obtained from the endothermic curve in a case where the resin composition was heated to 200°C at a temperature rising rate of 10°C/min.

### <Preparation and Evaluation Method for Molded Body>

### (Preparation of Molded Body)

Regarding the resin compositions obtained in Examples 1 to 6 and Comparative Examples 1 to 3, each of square plate molded bodies having a thickness of 3 mm was prepared by the method described in the following (1) square plate molding, and each of cylindrical molded bodies having a thickness of 10 mm was prepared by the method described in the following (2) cylindrical molding. Regarding the resin compositions obtained in Examples 7 to 12 and Comparative Examples 4 to 6, each of cylindrical molded bodies having a thickness of 10 mm was prepared by the method described in the following (2) cylindrical molding.

### (1) Square Plate Molding

Using an injection molding machine (SE30DUZ, manufactured by Sumitomo Heavy Industries, Ltd.), the resin compositions obtained in each of Examples and Comparative Examples were injection-molded under conditions of a cylinder temperature of 270°C and a mold temperature of 126°C, and test pieces of square plate molded bodies with an optical surface of 35 mm in length × 65 mm in width × 3 mm or 10 mm in thickness were prepared.

### (2) Cylindrical Molding

Using an injection molding machine (manufactured by Sumitomo Heavy Industries, Ltd.; SE30DUZ), the resin compositions obtained in each of Examples and Comparative Examples were injection-molded under conditions of a cylinder temperature of 270°C and a mold temperature of 135°C, and test pieces of cylindrical molded bodies with an optical surface of 30 mm in diameter × 10 mm in thickness were prepared.

### (Internal Haze)

For each test piece of the square plate molded bodies and the cylindrical molded bodies, the internal haze was measured with a haze meter using benzyl alcohol based on JIS K 7136: 2000. The results are shown in Table 1 and Table 2.

### (Visual Evaluation)

The transparency of each test piece of the square plate molded bodies and the cylindrical molded bodies was visually evaluated using an optical microscope and a condenser lamp. A case where no white turbidity was observed was evaluated as transparent (pass), and a case where white turbidity was observed was evaluated as white turbid (fail). The results are shown in Table 1 and Table 2.

### (Evaluation of Moisture-Heat Resistance)

For each test piece of the square plate molded bodies and the cylindrical molded bodies, a moisture heat test was performed by leaving the test piece in an atmosphere at a temperature of 65°C and a relative humidity of 90% for 168 hours. Thereafter, the test piece was taken out in an atmosphere of a temperature of 23°C and a relative humidity of 50% and allowed to stand for 48 hours. For these test pieces, the internal haze was measured with a haze meter using benzyl alcohol based on JIS K 7136: 2000. The Δinternal haze (a difference between the internal haze after the moisture-heat resistance test and the internal haze before the moisture-heat resistance test) was used as an index of moisture-heat resistance, and a test piece in which the Δinternal haze was equal to or less than 1.0% was evaluated as pass, and a test piece in which the Δinternal haze was more than 1.0% was evaluated as fail.

### (Evaluation of Mold Releasability)

Using an injection molding machine (SE30DUZ, manufactured by Sumitomo Heavy Industries, Ltd.), the resin compositions obtained in each of Examples and Comparative Examples were injection-molded under conditions of a cylinder temperature of 270°C and a mold temperature of 126°C, and test pieces of square plate molded bodies with an optical surface of 35 mm in length × 65 mm in width × 3 mm or 10 mm in thickness were prepared. A case where the molded article was ejected from the mold without resistance when the molded article was ejected after injection molding was evaluated as A, and a case where there was resistance during the ejection was evaluated as B.

### (Evaluation of Light Resistance)

Using an injection molding machine (SE30DUZ, manufactured by Sumitomo Heavy Industries, Ltd.), the resin compositions obtained in each of Examples and Comparative Examples were injection-molded under conditions of a cylinder temperature of 270°C and a mold temperature of 126°C, and test pieces of square plate molded bodies with an optical surface of 35 mm in length × 65 mm in width × 3 mm or 10 mm in thickness were prepared. The obtained test piece was subjected to a light resistance test at 63°C for 500 hours with a UV fade meter (U48AUHB, manufactured by Suga Test Instruments Co., Ltd.). For the test pieces before and after the light resistance test, the transmittance was measured with an ultraviolet and visible spectrophotometer (UH5700, manufactured by Hitachi High-Tech Science Corporation). A case where the difference in transmittance (Δtransmittance) at 450 nm before and after the light resistance test was within -5 points was evaluated as A, a case where the difference in transmittance was -5 to -10 points was evaluated as B, and a case where the difference in transmittance was more than -10 points was evaluated as C.

### (Comprehensive Evaluation)

As a result of the comprehensive evaluation, a case where both the visual evaluation and the evaluation of Moisture-Heat Resistance were passed was evaluated as "pass", and a case where at least one of the visual evaluation or the evaluation of Moisture-Heat Resistance was failed was evaluated as "fail".

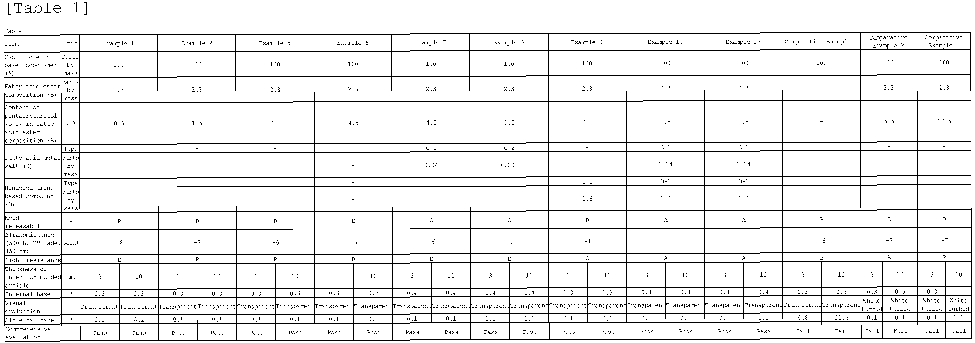

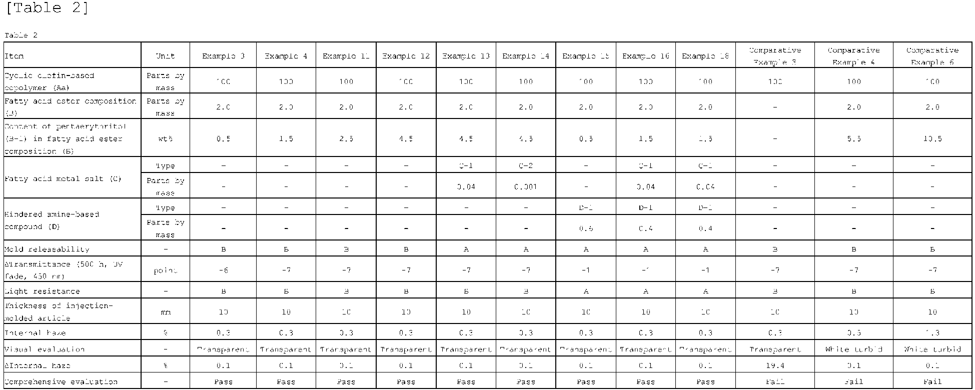

In the molded body of the resin composition described in each of Examples, in which the content of the pentaerythritol (B-1) in the fatty acid ester composition (B) was equal to or less than 5.0% by mass, the performance balance of moisture-heat resistance and transparency was improved as compared with the molded body of the resin composition described in each of Comparative Examples. In addition, in the resin compositions according to Examples 7 to 8, 10, 13 and 14, and 16 to 18, which further included the fatty acid metal salt (C), the mold releasability was improved while maintaining the performance balance of moisture-heat resistance and transparency, as compared with the resin composition not including the fatty acid metal salt (C). Furthermore, in Examples 9, 10, and 15 to 18, in which the hindered amine-based compound (D) was further included, the light resistance was improved as compared with the resin composition not including the hindered amine-based compound (D).

This application claims priority based on Japanese Patent Application No. 2023-162860 filed on September 26, 2023, the entire disclosure of which is incorporated herein.

## Claims

1. A resin composition comprising:
a cyclic olefin-based copolymer (A); and
a fatty acid ester composition (B) which includes pentaerythritol (B-1) and a fatty acid ester (B-2) of pentaerythritol,
wherein the cyclic olefin-based copolymer (A) contains a repeating unit (a) derived from at least one olefin represented by General Formula (I), and a repeating unit (b) derived from at least one cyclic olefin monomer selected from the group consisting of a repeating unit (AA) represented by General Formula (II), a repeating unit (AB) represented by General Formula (III), and a repeating unit (AC) represented by General Formula (IV), and
wherein in a case where a total content of the pentaerythritol (B-1) and the fatty acid ester (B-2) of pentaerythritol in the fatty acid ester composition (B) is set to 100% by mass, a content of the pentaerythritol (B-1) in the fatty acid ester composition (B) is equal to or less than 5.0% by mass, 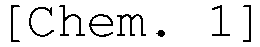 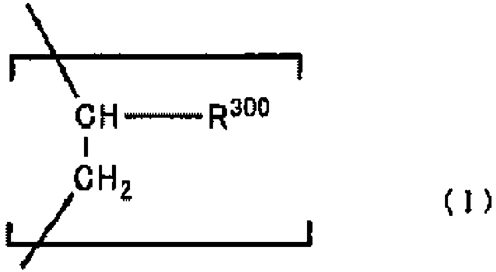
(in General Formula (I), R³⁰⁰ represents a hydrogen atom or a linear or branched hydrocarbon group having 1 to 29 carbon atoms), 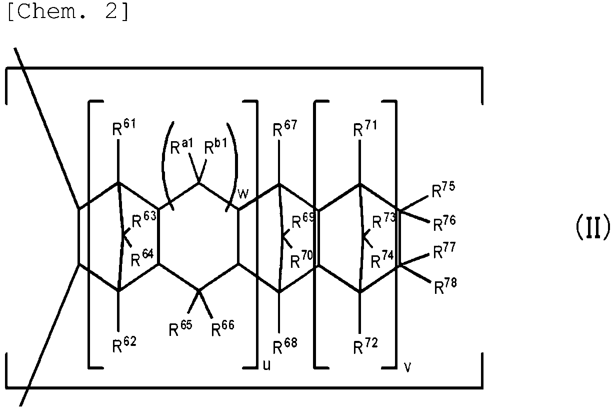
(in General Formula (II), u is 0 or 1, v is 0 or a positive integer, w is 0 or 1, R⁶¹ to R⁷⁸ and R^{a1} and R^{b1} may be the same or different from each other and are each a hydrogen atom, a halogen atom, an alkyl group having 1 to 20 carbon atoms, a halogenated alkyl group having 1 to 20 carbon atoms, a cycloalkyl group having 3 to 15 carbon atoms, or an aromatic hydrocarbon group having 6 to 20 carbon atoms, and R⁷⁵ to R⁷⁸ may be bonded to each other to form a monocyclic ring or a polycyclic ring), 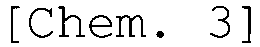 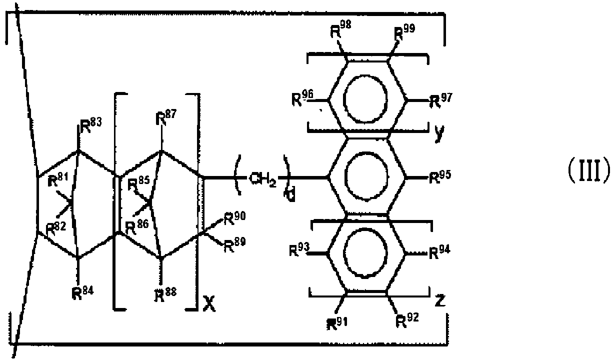
(in General Formula (III), x and d are each an integer of 0 or equal to or more than 1, y and z are each 0, 1, or 2, R⁸¹ to R⁹⁹ may be the same or different from each other and are each a hydrogen atom, a halogen atom, an aliphatic hydrocarbon group that is an alkyl group having 1 to 20 carbon atoms or a cycloalkyl group having 3 to 15 carbon atoms, an aromatic hydrocarbon group having 6 to 20 carbon atoms, or an alkoxy group, a carbon atom to which R⁸⁹ and R⁹⁰ are bonded and a carbon atom to which R⁹³ is bonded or a carbon atom to which R⁹¹ is bonded may be bonded directly or through an alkylene group having 1 to 3 carbon atoms, and in a case of y = z = 0, R⁹⁵ and R⁹² or R⁹⁵ and R⁹⁹ may be bonded to each other to form a monocyclic aromatic ring or a polycyclic aromatic ring), 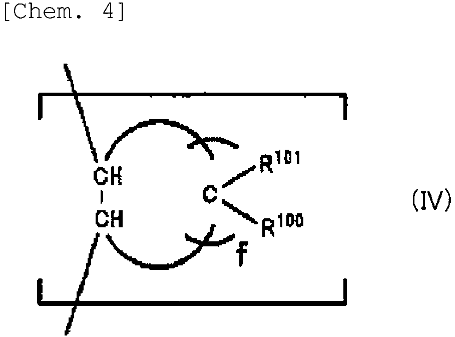
(in General Formula (IV), R¹⁰⁰ and R¹⁰¹ may be the same or different from each other, and each represent a hydrogen atom or a hydrocarbon group having 1 to 5 carbon atoms, and f is 1 ≤ f ≤ 18).

2. The resin composition according to Claim 1,
wherein the content of the pentaerythritol (B-1) in the fatty acid ester composition (B) is equal to or less than 3.0% by mass in a case where a total content of the pentaerythritol (B-1) and the fatty acid ester (B-2) of pentaerythritol in the fatty acid ester composition (B) is set to 100% by mass.

3. The resin composition according to Claim 1 or 2,
wherein a fatty acid constituting the fatty acid ester (B-2) of pentaerythritol includes a fatty acid having equal to or more than 12 and equal to or less than 18 carbon atoms.

4. The resin composition according to any one of Claims 1 to 3,
wherein the fatty acid ester (B-2) of pentaerythritol includes a compound represented by Formula (1),
RCOOCH₂C(CH₂OH)₃ ... (1)
(in Formula (1), R is a saturated hydrocarbon group having equal to or more than 11 and equal to or less than 17 carbon atoms).

5. The resin composition according to any one of Claims 1 to 4,
wherein the fatty acid ester (B-2) of pentaerythritol includes pentaerythritol monostearate.

6. The resin composition according to any one of Claims 1 to 5,
wherein a content of the fatty acid ester composition (B) is equal to or more than 0.05 parts by mass and equal to or less than 5.0 parts by mass in a case where a content of the cyclic olefin-based copolymer (A) is set to 100 parts by mass.

7. The resin composition according to any one of Claims 1 to 6,
wherein a total content of the cyclic olefin-based copolymer (A) and the fatty acid ester composition (B) is equal to or more than 70% by mass and equal to or less than 100% by mass in a case where a total solid content of the resin composition is set to 100% by mass.

8. The resin composition according to any one of Claims 1 to 7, further comprising:
a fatty acid metal salt (C).

9. The resin composition according to Claim 8,
wherein the fatty acid metal salt (C) includes a metal salt of a long-chain fatty acid having equal to or more than 12 carbon atoms.

10. The resin composition according to Claim 8 or 9,
wherein a content of the fatty acid metal salt (C) is equal to or more than 0.0001 parts by mass and equal to or less than 0.50 parts by mass with respect to 100 parts by mass of the cyclic olefin-based copolymer (A).

11. The resin composition according to any one of Claims 1 to 10, further comprising:
a hindered amine-based compound (D).

12. The resin composition according to Claim 11,
wherein a content of the hindered amine-based compound (D) is equal to or more than 0.05 parts by mass and equal to or less than 3.0 parts by mass with respect to 100 parts by mass of the cyclic olefin-based copolymer (A).

13. The resin composition according to any one of Claims 1 to 12,
wherein in a case where an entirety of repeating units constituting the cyclic olefin-based copolymer (A) is set to 100 mol%, a proportion of the repeating unit (a) in the cyclic olefin-based copolymer (A) is equal to or more than 5 mol% and equal to or less than 95 mol%.

14. The resin composition according to any one of Claims 1 to 13,
wherein the repeating unit (a) in the cyclic olefin-based copolymer (A) includes a repeating unit derived from ethylene.

15. The resin composition according to any one of Claims 1 to 14,
wherein in a case where an entirety of repeating units constituting the cyclic olefin-based copolymer (A) is set to 100 mol%, a proportion of the repeating unit (b) in the cyclic olefin-based copolymer (A) is equal to or more than 5 mol% and equal to or less than 95 mol%.

16. The resin composition according to any one of Claims 1 to 15,
wherein the repeating unit (b) in the cyclic olefin-based copolymer (A) includes the repeating unit (AA) represented by General Formula (II).

17. The resin composition according to any one of Claims 1 to 16,
wherein the repeating unit (b) in the cyclic olefin-based copolymer (A) includes a repeating unit derived from at least one selected from the group consisting of bicyclo[2.2.1]-2-heptene and tetracyclo[4.4.0.1^{2,5}.1^{7,10}]-3-dodecene.

18. The resin composition according to any one of Claims 1 to 17,
wherein the cyclic olefin-based copolymer (A) includes one or two or more selected from the group consisting of a random copolymer of ethylene and tetracyclo[4.4.0.1^{2,5}.1^{7,10}]-3-dodecene, a random copolymer of ethylene and bicyclo[2.2.1]-2-heptene, and a random copolymer of ethylene, tetracyclo[4.4.0.1^{2,5}.1^{7,10}]-3-dodecene and benzonorbornadiene.

19. The resin composition according to any one of Claims 1 to 18,
wherein an internal haze measured by (Method) below is equal to or less than 0.4%,
(Method)
in which using an injection molding machine, the resin composition is injection-molded under conditions of a cylinder temperature of 270°C and a mold temperature of 126°C to prepare a test piece with an optical surface of 35 mm × 65 mm × 10 mm in thickness, and an internal haze of the injection-molded test piece is measured with a haze meter using benzyl alcohol based on JIS K 7136: 2000.

20. A molded body comprising:
the resin composition according to any one of Claims 1 to 19.

21. An optical component comprising:
the molded body according to Claim 20.
